# EUROPEAN PATENT APPLICATION

(11) **EP 4 686 309 A1**
(43) Date of publication of application: **28.01.2026**
(21) Application number: 24784129.9
(22) Date of filing: 27.03.2024
(51) Int. Cl.: H04W 76/10

(54) **ELECTRONIC DEVICE AND METHOD ON USER EQUIPMENT SIDE AND BASE STATION SIDE FOR WIRELESS COMMUNICATION**

(30) Priority: 03.04.2023 CN 202310354826
(71) Applicant: Sony Group Corporation, Tokyo 108-0075 (JP)
(72) Inventor: SUN, Chen, Beijing 100027 (CN); BAI, Yingshuang, Beijing 100027 (CN)
(74) Representative: D Young & Co LLP
(86) International application number: PCT/CN2024/084007
(87) International publication number: WO 2024/208044

(57) **Abstract**

The present disclosure provides an electronic device and method on a user equipment side and a base station side for wireless communication, and a computer readable storage medium. The electronic device on the user equipment side for wireless communication comprises: a processing circuit configured to: pair a first artificial intelligence model used for performing spatial domain beam prediction and a second artificial intelligence model used for performing time domain beam prediction; and multiplex a beam measurement result between the first artificial intelligence model and the second artificial intelligence model if the pairing is successful.

## Description

This application claims priority to Chinese Patent Application No. 202310354826.7 titled "ELECTRONIC DEVICE AND METHOD ON USE REQUIPMENT SIDE AND BASE STATION SIDE FOR WIRELESS COMMUNICATION", filed on April 03, 2023 with the China National Intellectual Property Administration, which is incorporated herein by reference in its entirety.

### FIELD

The present disclosure relates to the field of wireless communications, and particularly to a technique for beam management based on artificial intelligence (AI) in wireless communications. More specifically, the present disclosure relates to an electronic apparatus and a method for user equipment side of wireless communications, an electronic apparatus and a method for base station side of wireless communications, and a computer-readable storage medium.

### BACKGROUND

As discussed and approved at the RAN#94e plenary meeting, a new SID is added to Rel-18 to introduce artificial intelligence/machine learning (AI/ML) into air interface access. AI-based beam management has become one of the main research directions. Use of AI/ML models for beam management can replace a conventional beam scanning process and thereby reduce overhead. Specifically, the AI/ML model may be trained with historical data, and the trained AI/ML model may be then used for predicting beam-related information.

Recently, companies have evaluated performance of AI-based beam management solutions, and discussed their impact on the physical layer and potential problems and solutions. At the RAN#98e plenary meeting, it was made clear that topics at this stage about RAN1's AI-based beam management only focus on two functional types, i.e., time domain beam prediction and spatial domain beam prediction. Due to differences of applicable environments, sizes of input and output sets, input and output parameter properties and other factors, there are many types of AI models under each functional type. A relationship between input and output of the AI model is also within the discussion scope of 3GPP.

### SUMMARY

In the following, an overview of the present disclosure is given simply to provide basic understanding to some aspects of the present disclosure. It should be understood that this overview is not an exhaustive overview of the present disclosure. It is not intended to determine a critical part or an important part of the present disclosure, nor to limit the scope of the present disclosure. An object of the overview is only to give some concepts in a simplified manner, which serves as a preface of a more detailed description described later.

According to an aspect of the present disclosure, an electronic apparatus for user equipment side of wireless communications is provided. The electronic apparatus includes processing circuitry, configured to: perform matching on a first artificial intelligence (AI) model for performing spatial domain beam prediction and a second AI model for performing time domain beam prediction; and in a case of matching succeeding, reuse beam measurement results between the first AI model and the second AI model.

According to another aspect of the present disclosure, a method for user equipment side of wireless communications is provided. The method includes: performing matching on a first artificial intelligence (AI) model for performing spatial domain beam prediction and a second AI model for performing time domain beam prediction; and in a case of matching succeeding, reusing beam measurement results between the first AI model and the second AI model.

According to an aspect of the present disclosure, an electronic apparatus for a base station side of wireless communications is provided. The electronic apparatus includes processing circuitry, configured to: perform matching on a first artificial intelligence (AI) model for performing spatial domain beam prediction and a second AI model for performing time domain beam prediction; and in a case of matching succeeding, reuse beam measurement results between the first AI model and the second AI model.

According to another aspect of the present disclosure, a method for a base station side of wireless communications is provided. The method includes: performing matching on a first artificial intelligence (AI) model for performing spatial domain beam prediction and a second AI model for performing time domain beam prediction; and in a case of matching succeeding, reusing beam measurement results between the first AI model and the second AI model.

According to other aspects of the present disclosure, computer program codes and a computer program product for implementing the above-described method for wireless communications and a computer-readable storage medium having the computer program codes for implementing the method for wireless communications stored thereon are further provided.

With the electronic apparatus and method according to embodiments of the present disclosure, matching on the two functional types of AI models for beam prediction is performed and beam measurement results are reused, so that overhead for beam measurement is further reduced.

These and other advantages of the present disclosure will become more apparent through the following detailed description of the preferred embodiments of the present disclosure in conjunction with the accompanying drawings.

### BRIEF DESCRIPTION OF THE DRAWINGS

To further set forth the above and other advantages and features of the present disclosure, detailed description will be made in the following taken in conjunction with accompanying drawings in which identical or like reference signs designate identical or like components. The accompanying drawings, together with the detailed description below, are incorporated into and form a part of the specification. It should be noted that the accompanying drawings only illustrate, by way of example, typical embodiments of the present disclosure and should not be construed as a limitation to the scope of the disclosure. In the accompanying drawings:
FIG. 1 is a block diagram illustrating functional modules of an electronic apparatus for a user equipment side of wireless communications according to an embodiment of the present disclosure;
FIG. 2 illustrates a schematic diagram of AI-based beam management;
FIG. 3 illustrates a schematic diagram of an example of an information flow between user equipment and a base station according to an embodiment of the present disclosure;
FIG. 4 illustrates a schematic diagram of another example of an information flow between user equipment and a base station according to an embodiment of the present disclosure;
FIG. 5 illustrates a schematic diagram of another example of an information flow between user equipment and a base station according to an embodiment of the present disclosure;
FIG. 6 illustrates a schematic diagram of another example of an information flow between user equipment and a base station according to an embodiment of the present disclosure;
FIG. 7 illustrates a schematic diagram of another example of an information flow between user equipment and a base station according to an embodiment of the present disclosure;
FIG. 8 illustrates a schematic diagram of another example of an information flow between user equipment and a base station according to an embodiment of the present disclosure;
FIG. 9 illustrates a schematic diagram of another example of an information flow between user equipment and a base station according to an embodiment of the present disclosure;
FIG. 10 illustrates a schematic diagram of another example of an information flow between user equipment and a base station according to an embodiment of the present disclosure;
FIG. 11 illustrates a schematic diagram of another example of an information flow between user equipment and a base station according to an embodiment of the present disclosure;
FIG. 12 is a block diagram illustrating functional modules of an electronic apparatus for a base station side of wireless communications according to another embodiment of the present disclosure;
FIG. 13 illustrates a schematic diagram of another example of an information flow between user equipment and a base station according to an embodiment of the present disclosure;
FIG. 14 illustrates a flow chart of a method for a user equipment side of wireless communications according to an embodiment of the present disclosure;
FIG. 15 illustrates a flow chart of a method for a base station side of wireless communications according to another embodiment of the present disclosure;
FIG. 16 is a block diagram showing a first example of a schematic configuration of an eNB or gNB to which the technology of the present disclosure is applicable;
FIG. 17 is a block diagram showing a second example of a schematic configuration of an eNB or gNB to which the technology of the present disclosure is applicable;
FIG. 18 is a block diagram showing an example of a schematic configuration of a smart phone to which the technology of the present disclosure is applicable;
FIG. 19 is a block diagram showing an example of a schematic configuration of a car navigation device to which the technology of the present disclosure is applicable; and
FIG. 20 is a block diagram of an exemplary structure of a general-purpose personal computer in which a method and/or apparatus and/or system according to an embodiment of the present disclosure may be implemented.

### DETAILED DESCRIPTION

An exemplary embodiment of the present disclosure will be described hereinafter in conjunction with the accompanying drawings. For the purpose of conciseness and clarity, not all features of an embodiment are described in this specification. However, it should be understood that multiple decisions specific to the embodiment have to be made in a process of developing any such embodiment to realize a particular object of a developer, for example, conforming to those constraints related to a system and a service, and these constraints may change as the embodiments differs. Furthermore, it should also be understood that although the development work may be very complicated and time-consuming, for those skilled in the art benefiting from the present disclosure, such development work is only a routine task.

Here, it should also be noted that in order to avoid obscuring the present disclosure due to unnecessary details, only a device structure and/or processing steps closely related to the solution according to the present disclosure are illustrated in the accompanying drawing, and other details having little relationship to the present disclosure are omitted.

### <First Embodiment>

As mentioned above, due to differences of applicable environments, sizes of input and output sets, input and output parameter properties and other factors, there are many types of AI models for beam prediction. As both an AI model with spatial domain beam prediction and an AI model with time domain beam prediction are working, inputs of the two AI models may overlap, and repeated measurements may cause unnecessary measurement overhead. In this embodiment, in order to reduce the measurement overhead, a framework structure is provided for beam management by performing matching on the two functional types of AI models. A structure and operation of an electronic apparatus implementing the frame structure is described in detail below with reference to the accompanying drawings.

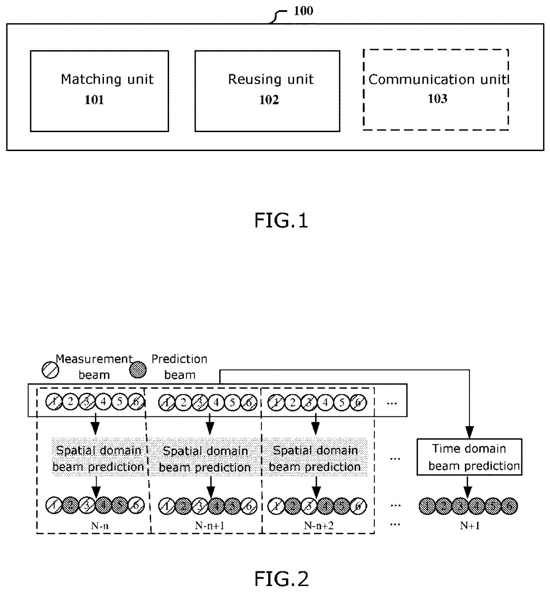

FIG. 1 is a block diagram illustrating functional modules of an electronic apparatus for a user equipment side of wireless communications according to an embodiment of the present disclosure. As shown in FIG. 1, the electronic apparatus 100 includes a matching unit 101 and a reusing unit 102. The matching unit 101 is configured to perform matching on a first artificial intelligence (AI) model for performing spatial domain beam prediction and a second AI model for performing time domain beam prediction. The reusing unit 102 is configured to reuse beam measurement results between the first AI model and the second AI model, in a case of matching succeeding.

The matching unit 101 and the reusing unit 102 may be implemented by one or more processing circuitries. The processing circuitry may be implemented as a chip or a processor, for example. Moreover, it should be understood that various functional units in the electronic apparatus shown in FIG. 1 are only logical modules divided based on specific functions thereof, and are not intended to limit a specific implementation. The first, second here are only for a purpose of distinguishing and do not represent any meaning of order or priority.

The electronic apparatus 100 may be located on the user equipment (UE) side, for example. The UE may be various wireless communication terminals, or may be a mobile base station or other communication terminals. The electronic apparatus 100 may be implemented at a chip level or at an apparatus level. For example, the electronic apparatus 100 may operate as the UE itself and may further include a memory, a transceiver (not shown), and other external devices. The memory may store related data information and programs that the UE needs to execute to achieve various functions. The transceiver may include one or more communication interfaces to support communications with different devices (such as another UE, a base station, a core network, and the like). An implementation of the transceiver is not specifically limited here.

For ease of understanding, FIG. 2 illustrates a schematic diagram of AI-based beam management. In FIG. 2, both spatial domain beam prediction and time domain beam prediction are shown. The numbers 1 to 6 in FIG. 2 represent different beams, and N-n, N-n+1, ..., N+1 represent different time instants. It should be noted that the numbers and letters are illustrative rather than limiting. In the spatial domain beam prediction, in each measurement period, a measurement beam set, such as beams {1, 3, 6}, is measured, and the measured beam information is inputted into a pre-trained AI model for the spatial domain beam prediction (i.e., the first AI model, also referred to as AI-S hereinafter), to obtain prediction results of beam information of beams 2, 4 and 5. In the time domain beam prediction, beam information obtained at multiple historical time instants (such as N-n, N-n+1, ..., N) may be collected as an input to a pre-trained AI model for the time domain beam prediction (i.e., the second AI model, also referred to as AI-T hereinafter), so that beam information at time instant N+1 is predicted.

In an example, the matching is successful in a case that the input beam set for the first AI model contains the input beam set for the second AI model and input parameter properties of the first AI model contain input parameter properties of the second AI model. The input beam set indicates measurement results of which beams are required as an input to the AI model. The input parameter properties indicate content nature of the input to the AI model, for example, the input parameter properties may include at least one of the following: a reference signal receiving power (RSRP) and a channel impulse response (CIR). The "contain" here may be understood, for example, that the latter is a subset of the former or the two are the same. For example, in a case that the input beam set of the first AI model includes beams 1 to 6, and the input beam set of the second AI model includes beams 1, 3, and 5, and the input parameter properties of the two are both RSRP, the matching is successful.

In other words, the matching succeeds in a case that at least a part of the beam measurement results of the first AI model is applicable for prediction of the second AI model. That is, the reused beam measurement result includes at least a part of measurement results with respect to beams in the input beam set for the first AI model. In a case of matching succeeding, it is only necessary to store the input of the first AI during a working period of the second AI and make the prediction using the stored input, where repeated measurements are not required. In this way, a measurement result can be shared between the two AI models, so that the measurement overhead is reduced.

After the matching is successful, in a case of occurrence of switching of the first AI model and/or the second AI model, the matching unit 101 is configured to re-perform the matching. This is because that a model parameter may change in response to switching of an AI model, and a condition for successful matching may not be met in this case.

In summary, with the electronic apparatus 100 according to embodiment of the present disclosure, matching on the two functional types of AI models for beam prediction is performed and beam measurement results can be reused between the two AI models, so that overhead for beam measurement is further reduced.

Hereinafter, embodiments in which the first AI model and the second AI model are deployed at different locations are described in detail. It should be noted that this is not restrictive. Furthermore, features and operations in the embodiments herein may be combined with each other without contradiction, and such combination is not necessarily explicitly stated.

### <Second Embodiment>

In this embodiment, the first AI model and the second AI model are both disposed on the UE side. The matching unit 101 is configured to perform matching based on a model parameter of the first AI model and a model parameter of the second AI model, to determine whether the matching is successful. The model parameter of the first AI model includes, for example, one or more of the following: an input parameter size and input and output parameter properties. The input parameter size may refer to the number of beams for measurement or may indicate information of a to-be-measured beam set. The input and output parameter properties include, for example, at least one of the above-mentioned RSRP and CIR. The model parameter of the second AI model includes, for example, one or more of the following: an input time window length and an output time window length, an input parameter size, input and output parameter properties, and a minimum number of measurements of historical data to be used. The input time window length refers to a size of a time range of measurement beam information for prediction. The output time window length refers to a size of a time range of beam information obtained from prediction. The input parameter size refers to the number of measurement beams in each measurement or information of a beam set in each measurement. The input and output parameter properties include, for example, at least one of RSRP and CIR. The minimum number of measurements of historical data to be used refers to the minimum number of groups of historical data on which each prediction is based, that is, the minimum number of measurements required within the input time window length.

As shown in the dotted box in FIG. 1, the electronic apparatus 100 further includes a communication unit 103. For example, the communication unit 103 is configured to send, to the base station, a message indicating whether the matching is successful or unsuccessful. This message may occupy 1 bit, for example. In a case that the matching is successful, for example, this bit is assigned a value of 1 to notify the base station, such as a gNB, that the AI model currently performing beam management includes two functional types, that is, matching on the first AI model and the second AI model is successful. On the contrary, in a case that the matching is unsuccessful, the bit is assigned a value of 0, to notify the base station that the matching is unsuccessful. It should be understood that the correspondence between the value of the 1-bit and the meaning thereof may be inversed, which is not limited. Alternatively, the communication unit 103 may send the indication message to the base station only in a case that the matching is successful.

In a case that the matching is successful, the UE side regards the first AI model and the second AI model as a whole, and the communication unit 103 may further send the model parameter or model index of the second AI model to the base station, for informing the base station which AI model is to be used for prediction. The model parameter here includes, for example, one or more of the following: an input time window length and an output time window length, an input parameter size, input and output parameter properties, and the like. In addition, in a case that the base station and the UE are able to reach a consensus on all AI models, the model parameters of each of the AI models may be replaced by model indexes, so that the signaling overhead is further reduced. The above-mentioned 1-bit indication information and the model parameter or model index here may be transmitted through a control channel. The two may be included in the same signaling or may be sent using different signaling.

In a case that the matching is unsuccessful, the matching unit 101 may be further configured to determine to use one of the first AI model and the second AI model, or to use no AI model and adopt a non-AI beam management mechanism. In a case that it is determined to use one of the first AI model and the second AI model, the communication unit 103 is configured to send, to the base station, a model parameter or model index of the AI model to be used. In a case that it is determined to adopt a non-AI beam management mechanism, the communication unit 103 may send no indication information to the base station. Similarly, the model parameter or model index may be transmitted via the control channel.

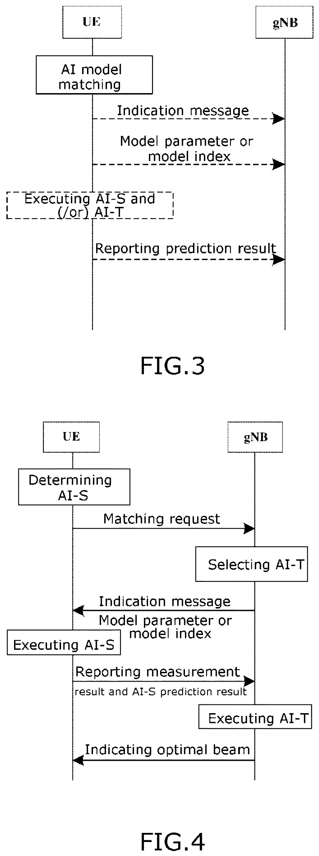

For ease of understanding, FIG. 3 illustrates a schematic diagram of an information flow between a UE and a gNB according to the embodiment. First, the UE performs matching on the first AI model (AI-S) and the second AI model (AI-T). In a case that the matching is successful, the UE sends a message to the gNB, indicating that the matching succeeds, and may further send a model parameter or model index of the second AI model to the gNB. It should be noted that although two arrows are shown here representing signaling used for sending, this does not mean that two pieces of signaling are necessarily required to send the indication message and the model parameter or model index, which may also be sent in one piece of signaling. The above is just an example. Similar situations are applied in information flows illustrated below. For example, one arrow does not necessarily represent one single piece of signaling.

Then, the AI-S and the AI-T are performed on the UE side and a prediction result or a part of the prediction result is reported to the gNB, for example, via a data channel. In addition, the UE may further report the measurement result to the gNB as needed. FIG. 3 mainly shows a case that the matching is successful. In a case that the matching is unsuccessful, as shown in the dotted box in FIG. 3, the UE may optionally send one of the following to the gNB: a message of unsuccessful matching and the model parameter or model index of the AI-S or AI-T to be used, the model parameter or model index of the AI-S or AI-T to be used; alternatively, no message is sent and a non-AI beam management mechanism is adopted.

After the matching is successful, the first AI model may be kept silent within an output time window of the second AI model.

After the matching is successful, in a case that the first AI model and/or the second AI model triggers a supervision mechanism, the communication unit 103 is configured to obtain an execution period of the supervision mechanism, and the matching unit 101 is configured to keep an unsupervised AI model silent during the execution period. In a case that the supervision is performed by the UE side, the communication unit 103 may locally obtain information of the execution period. In a case that the supervision is performed by the base station side, the communication unit 103 obtains information of the execution period or a parameter value capable of deriving the execution period through specific signaling.

In addition, after the matching is successful, in a case that the matching is re-performed due to switching of the first AI model and/or the second AI model, if the matching is unsuccessful, the communication unit 103 needs to notify the gNB of a message that the matching is unsuccessful.

### <Third Embodiment>

In the embodiment, the first AI model is disposed on one of the UE side and the base station side, the second AI model is disposed on the other one of the UE side and the base station side, and the matching unit 101 is configured to perform the matching through interaction with the base station via the communication unit 103. The matching is initiated by the UE.

For example, the matching unit 101 may determine an AI model to be used on the UE side; and the communication unit 103 sends a matching request to the base station, enabling the base station to determine an AI model to be used on the base station side based on the matching request, and receives, from the base station, a message indicating whether the matching is successful or unsuccessful. The matching unit 101 determines, based on the message, whether the matching is successful. The matching request may include a model parameter or model index of the AI model to be used on the UE side.

In a case that the matching is successful, the communication unit 103 is further configured to receive, from the base station, a model parameter or model index of the AI model to be used by the base station. After the matching is successful, the reusing unit 102 reuses the beam measurement results between the first AI model and the second AI model through the communication unit 103. After the matching is successful, the first AI model may be kept silent within an output time window of the second AI model.

In another aspect, in a case that the matching is unsuccessful, the communication unit 103 may be further configured to send, to the base station, a message indicating whether the first AI model or the second AI model is to be selected. Alternatively, the communication unit 103 may send no message and adopt a non-AI beam management mechanism, or send a message to the base station indicating that a non-AI beam management mechanism is to be adopted.

In a first example, the first AI model is disposed on the UE side, and the second AI model is disposed on the base station side. In this case, the matching request may include a model parameter of the first AI model to be used on the UE side, such as an input parameter size and input and output parameter properties of the first AI model, or include a model index of the first AI model. On reception of the matching request, the base station may select a best second AI model that meets the requirements. In a case that such a second AI model can be found, the base station sends a message to the UE indicating that the matching is successful, such as a 1-bit message, and sends a model parameter or model index of the selected second AI model to the UE. The model parameter of the second AI model received from the base station may include, for example, at least an input time window length and an output time window length and a minimum number of measurements of historical data to be used. The UE side may determine, based on the minimum number of measurements, the number of execution times of scheduling the first AI model.

In a case that the matching is unsuccessful, if the UE is to select the first AI model, the message sent by the communication unit 103 to the base station includes the model parameter or model index of the selected first AI model; and if the UE is to select the second AI model, the message sent by the communication unit 103 to the base station includes information of a 1-bit notification for informing the base station to use the second AI model for beam prediction.

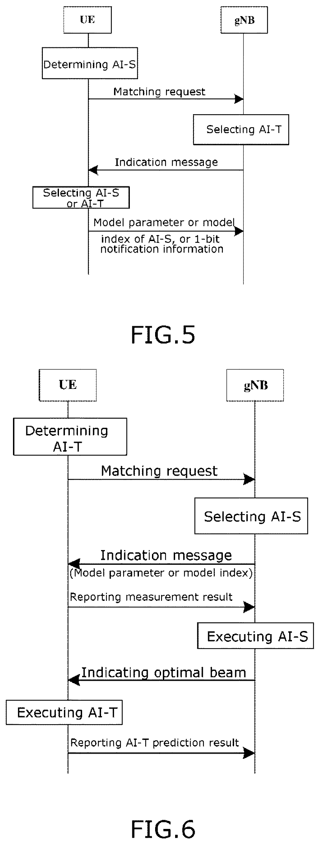

For ease of understanding, FIG. 4 and FIG. 5 each illustrates a schematic diagram of an information flow between a UE and a gNB according to the first example. FIG. 4 shows a case that matching is successful, and FIG. 5 shows a case that matching is unsuccessful. The UE initiates the matching by first determining the first AI model to be used, namely AI-S, and then sending a matching request to the gNB. The matching request may include a model parameter or model index of the AI-S. On reception of the matching request, the gNB selects, based on the AI-S, a best AI-T matched with the AI-S, and determines that the matching is successful in a case that such a AI-T can be found. The gNB sends, to the UE, an indication message indicating that the matching is successful and the model parameter or model index of the AI-T. Then, after the matching is successful, the UE side executes the AI-S and reports a prediction result of the AI-S and a beam measurement result to the gNB, for example, through a data channel. The gNB stores the measurement result reported by the UE within an input time window length as an input to the AI-T, and thereby executes the AI-T and indicates an optimal beam to the UE. The communication unit 103 on the UE side may report, to the base station, a beam measurement result within the input time window length of the AI-T in a single-time or multiple-time manner, so that the AI-T performs beam prediction using the beam measurement result.

Referring to FIG. 5, in a case that the matching is unsuccessful, the gNB sends an indication message to the UE indicating that the matching is unsuccessful, and then the UE selects the AI-S or the AI-T, and sends the model parameter or model index of the AI-S to the gNB when the AI-S is selected, and sends information of a 1-bit notification to the gNB when the AI-T is selected.

In a second example, the second AI model is disposed on the UE side, and the first AI model is disposed on the base station side. In this case, the matching request may include a model parameter of the second AI model to be used on the UE side, such as an input time window length and an output time window length, an input parameter size and input and output parameter properties of the second AI model, or include a model index of the second AI model. On reception of the matching request, the base station may select a best first AI model that meets the requirements. In a case that such a first AI model can be found, the base station sends a message to the UE indicating that the matching is successful, such as a 1-bit message. In addition, in a case that the input of the first AI model requires more extension information, for example, the input parameter size of the first AI model is greater than the input parameter size of the second AI model, the base station further needs to send this information to the UE. For example, the base station may send the model parameter or model index of the selected first AI model to the UE. The model parameter of the first AI model received from the base station includes, for example, the input parameter size of the first AI model.

In a case that the matching is unsuccessful, if the UE is to select the second AI model, the message sent by the communication unit 103 to the base station includes the model parameter or model index of the selected second AI model; and if the UE is to select the first AI model, the message sent by the communication unit 103 to the base station includes a 1-bit notification for informing the base station to use the first AI model for beam prediction.

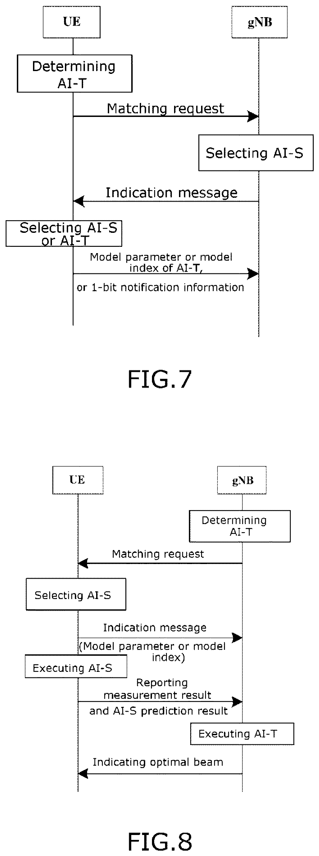

For ease of understanding, FIG. 6 and FIG. 7 each illustrates a schematic diagram of an information flow between a UE and a gNB according to the second example. FIG. 6 shows a case that matching is successful, and FIG. 7 shows a case that matching is unsuccessful. The UE initiates the matching by first determining the second AI model to be used, namely AI-T, and then sending a matching request to the gNB. The matching request may include a model parameter or model index of the AI-T. On reception of the matching request, the gNB selects, based on the AI-T, a best AI-S matched with the AI-T, and determines that the matching is successful in a case that such a AI-S can be found. The gNB sends, to the UE, an indication message indicating that the matching is successful, and sends the model parameter (such as an input parameter size) or model index of the AI-S in a case that the input parameter size of the AI-S is greater than an input parameter size of the AI-T. Then, after the matching is successful, the UE may report a beam measurement result to the gNB, for example, via a data channel. The gNB executes the AI-S using the beam measurement result and indicates an optimal beam to the UE. The UE side stores the measurement result within an input time window length as an input to the AI-T, and thereby executes the AI-T and reports a prediction result to the gNB.

Referring to FIG. 7, in a case that the matching is unsuccessful, the gNB sends an indication message to the UE indicating that the matching is unsuccessful, and then the UE selects the AI-S or the AI-T, and sends the model parameter or model index of the AI-T to the gNB when the AI-T is selected, and sends information of a 1-bit notification to the gNB when the AI-S is selected.

In addition, after the matching is successful, in a case that the first AI model and the second AI model trigger a supervision mechanism, when the supervision mechanism is executed by the UE, the communication unit 103 provides the base station with an execution period of the supervision mechanism, and when the supervision mechanism is executed by the base station, the communication unit 103 obtains the execution period of the supervision mechanism from the base station. In a case that an AI model on the base station side triggers a supervision mechanism, the matching unit 101 is configured to keep an AI model on the UE side silent during the execution period.

Similarly, after the matching is successful, in a case of occurrence of switching of the first AI model and/or the second AI model, the matching is re-performed between the UE and the base station.

### <Fourth Embodiment>

In the embodiment, similar to the third embodiment, the first AI model is disposed on one of the UE side and the base station side, the second AI model is disposed on the other one of the UE side and the base station side, and the matching unit 101 is configured to perform the matching through interaction with the base station via the communication unit 103. Unlike the third embodiment, the matching here is initiated by the base station.

For example, the base station determines an AI model to be used in the matching, and includes a model parameter or model index of the determined AI model in a matching request and sends the matching request to the UE. The communication unit 103 on the UE side is configured to receive the matching request from the base station. The matching unit 101 is configured to determine, according to the received matching request, an AI model to be used by the UE in the matching. The communication unit 103 is configured to send, to the base station, a message indicating whether the matching is successful or unsuccessful.

In a case that the matching is successful, the communication unit 103 is further configured to send, to the base station, a model parameter or model index of the AI model on the UE side. After the matching is successful, the reusing unit 102 reuses beam measurement results between the first AI model and the second AI model through the communication unit 103. After the matching is successful, the first AI model may be kept silent within an output time window of the second AI model.

In another aspect, in a case that the matching is unsuccessful, the communication unit 103 may be further configured to receive, from the base station, a message indicating whether the first AI model or the second AI model is to be selected. Alternatively, the communication unit 103 may receive no message and adopt a non-AI beam management mechanism, or receive a message, from the base station, indicating that a non-AI beam management mechanism is to be adopted.

In a first example, the first AI model is disposed on the UE side, and the second AI model is disposed on the base station side. In this case, the matching request may include one or more of the following model parameters of the second AI model to be used on the base station side: an input time window length and an output time window length, an input parameter size, input and output parameter properties, and a minimum number of measurements of historical data to be used. Alternatively, the matching request may include a model index of the second AI model. On reception of the matching request, the UE may select a best first AI model that meets the requirements. In a case that such a first AI model can be found, the communication unit 103 sends, to the base station, information of a message indicating that the matching is successful, such as an 1-bit message, and sends the model parameter (such as an input parameter size) or model index of the first AI model in a case that the input parameter size of the first AI model is greater than an input parameter size of the second AI model.

In a case that the matching is unsuccessful, if the base station is to select the first AI model, the message received by the communication unit 103 from the base station includes information of a 1-bit notification for informing the UE to use the first AI model for beam prediction; if the base station is to select the second AI model, the message received by the communication unit 103 from the base station includes the model parameter or model index of the selected second AI model.

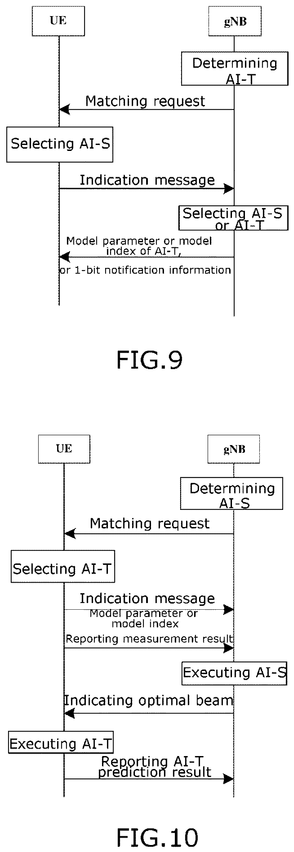

For ease of understanding, FIG. 8 and FIG. 9 each illustrates a schematic diagram of an information flow between a UE and a gNB according to the first example. FIG. 8 shows a case that matching is successful, and FIG. 9 shows a case that matching is unsuccessful. The gNB initiates the matching by first determining the second AI model to be used, namely AI-T, and then sending a matching request to the UE. The matching request may include a model parameter or model index of the AI-T. On reception of the matching request, the UE selects, based on the AI-T, a best AI-S matched with the AI-T, and determines that the matching is successful in a case that such a AI-S can be found. The UE sends, to the gNB, an indication message indicating that the matching is successful, and sends the model parameter (such as an input parameter size) or model index of the AI-S in a case that the input parameter size of the AI-S is greater than an input parameter size of the AI-T. Then, after the matching is successful, the UE side executes the AI-S and reports a prediction result of the AI-S and a beam measurement result to the gNB, for example, through a data channel. The gNB stores the measurement result reported by the UE within an input time window length as an input to the AI-T, and thereby executes the AI-T and indicates an optimal beam to the UE. The communication unit 103 on the UE side may report, to the base station, a beam measurement result within the input time window length of the AI-T in a single-time or multiple-time manner, so that the AI-T performs beam prediction using the beam measurement result.

Referring to FIG. 9, in a case that the matching is unsuccessful, the UE sends an indication message to the gNB indicating that the matching is unsuccessful, and then the gNB selects the AI-S or the AI-T, and sends the model parameter or model index of the AI-T to the UE when the AI-T is selected, and sends information of a 1-bit notification to the gNB when the AI-S is selected.

In a second example, the second AI model is disposed on the UE side, and the first AI model is disposed on the base station side. In this case, the matching request may include a model parameter of the first AI model to be used on the base station side, such as an input parameter size and input and output parameter properties of the first AI model, or include a model index of the first AI model. On reception of the matching request, the UE may select a best second AI model that meets the requirements. In a case that such a second AI model can be found, the communication unit 103 sends a message to the base station indicating that the matching is successful, such as a 1-bit message. In addition, the communication unit 103 further needs to send, to the base station, a model parameter or model index of the selected second AI model. The model parameter of the second AI model may include, for example, at least an input time window length and an output time window length.

In a case that the matching is unsuccessful, if the base station is to select the first AI model, the message received by the communication unit 103 from the base station includes the model parameter or model index of the selected first AI model; and if the base station is to select the second AI model, the message received by the communication unit 103 from the base station includes information of a 1-bit notification for informing the UE to use the second AI model for beam prediction.

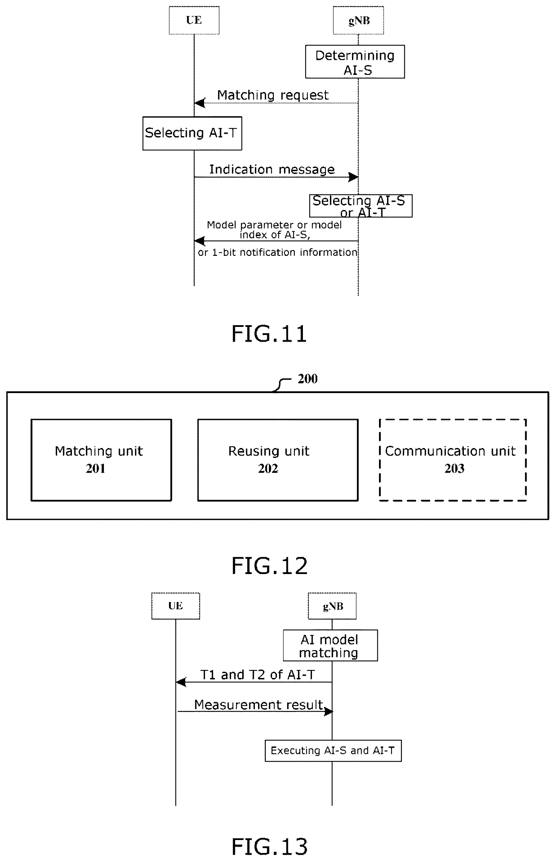

For ease of understanding, FIG. 10 and FIG. 11 each illustrates a schematic diagram of an information flow between a UE and a gNB according to the second example. FIG. 10 shows a case that matching is successful, and FIG. 11 shows a case that matching is unsuccessful. The gNB initiates the matching by first determining the first AI model to be used, namely AI-S, and then sending a matching request to the UE. The matching request may include a model parameter or model index of the AI-S. On reception of the matching request, the UE selects, based on the AI-S, a best AI-T matched with the AI-S, and determines that the matching is successful in a case that such a AI-T can be found. The UE sends, to the gNB, an indication message indicating that the matching is successful and the model parameter or model index of the AI-T. Then, after the matching is successful, the UE may report a beam measurement result to the gNB, for example, via a data channel. The gNB executes the AI-S using the beam measurement result and indicates an optimal beam to the UE. The UE side stores the measurement result within an input time window length as an input to the AI-T, and thereby executes the AI-T and reports a prediction result to the gNB.

Referring to FIG. 11, in a case that the matching is unsuccessful, the UE sends an indication message to the gNB indicating that the matching is unsuccessful, and then the gNB selects the AI-S or the AI-T, and sends the model parameter or model index of the AI-S to the UE when the AI-S is selected, and sends information of a 1-bit notification to the UE when the AI-T is selected.

In addition, after the matching is successful, in a case that the first AI model and the second AI model trigger a supervision mechanism, when the supervision mechanism is executed by the UE, the communication unit 103 provides the base station with an execution period of the supervision mechanism, and when the supervision mechanism is executed by the base station, the communication unit 103 obtains the execution period of the supervision mechanism from the base station. In a case that an AI model on the base station side triggers a supervision mechanism, the matching unit 101 is configured to keep an AI model on the UE side silent during the execution period.

Similarly, after the matching is successful, in a case of occurrence of switching of the first AI model and/or the second AI model, the matching is re-performed between the UE and the base station.

### <Fifth Embodiment>

From the above description of the framework of matching based on AI models, it can be seen that an electronic apparatus 200 for a base station side of wireless communications is provided according to an embodiment of the present disclosure. As shown in FIG. 12, the electronic apparatus 200 includes a matching unit 201 and a reusing unit 202. The matching unit 201 is configured to perform matching on a first AI model for performing spatial domain beam prediction and a second AI model for performing time domain beam prediction. The reusing unit 202 is configured to reuse beam measurement results between the first AI model and the second AI model, in a case of matching succeeding.

The matching unit 201 and the reusing unit 202 may be implemented by one or more processing circuitries. The processing circuitry may be implemented as a chip or a processor, for example. It should be understood that various functional units in the electronic apparatus shown in FIG. 12 are only logical modules divided based on specific functions thereof, and are not intended to limit a specific implementation. The first, second here are only for a purpose of distinguishing and do not represent any meaning of order or priority.

The electronic apparatus 200 may be disposed on a base station side or a wireless transceiving node side. It should be noted that the electronic apparatus 200 may be implemented at a chip level or at a device level. For example, the electronic apparatus 200 may operate as the base station itself and may further include a memory, a transceiver (not shown), and other external devices. The memory may store related data information and programs that the base station needs to execute to achieve various functions. The transceiver may include one or more communication interfaces to support communications with different devices (such as another base station, UE, and the like). An implementation of the transceiver is not specifically limited here.

The AI-based beam management described above in the first embodiment with reference to FIG. 2 is also applicable to this embodiment. In addition, the model parameters of the AI models, definitions of the model parameters, matching rules thereof, and signaling processes compatible with this embodiment described in the first to fourth embodiments are also applicable to this embodiment and subsequent embodiments, and are appropriately simplified or omitted in the following description.

In an example, the matching is successful in a case that the input beam set for the first AI model contains the input beam set for the second AI model and input parameter properties of the first AI model contain input parameter properties of the second AI model. The input beam set indicates measurement results of which beams are required as an input to the AI model. The input parameter properties indicate content nature of the input to the AI model, for example, the input parameter properties may include at least one of RSRP and CIR. The "contain" here may be understood, for example, that the latter is a subset of the former.

In other words, at least a part of the beam measurement results of the first AI model can be used for prediction of the second AI model, and thus matching can achieved. In this way, a measurement result at a time can be shared between the two AI models, so that the measurement overhead is reduced.

After the matching is successful, in a case of occurrence of switching of the first AI model and/or the second AI model, the matching unit 101 is configured to re-perform the matching. This is because that a model parameter may change in response to switching of an AI model, and a condition for successful matching may not be met in this case.

In summary, with the electronic apparatus 200 according to embodiment of the present disclosure, matching on the two functional types of AI models for beam prediction is performed and beam measurement results can be reused between the two types of AI models, so that the overhead for beam measurement is further reduced.

Hereinafter, embodiments in which the first AI model and the second AI model are deployed at different locations are described from a prospective of a base station. It should be noted that this is not restrictive.

### <Sixth Embodiment>

In this embodiment, the first AI model and the second AI model are both disposed on the base station side. The matching unit 201 is configured to perform matching based on a model parameter of the first AI model and a model parameter of the second AI model, to determine whether the matching is successful. The model parameter of the first AI model includes, for example, one or more of the following: an input parameter size and input and output parameter properties. The model parameter of the second AI model includes, for example, one or more of the following: an input time window length and an output time window length, an input parameter size, input and output parameter properties, and a minimum number of measurements of historical data to be used.

As shown in the dotted box in FIG. 12, the electronic apparatus 100 further includes a communication unit 203. For example, in a case that the matching is successful, the communication unit 203 is configured to send, to the UE, an input time window length (T1) and an output time window length (T2) of the second AI model. The UE performs beam measurement within the input time window length and reports a measurement result. The base station stores the beam measurement result within the input time window length as an input to the second AI model.

For ease of understanding, FIG. 13 illustrates a schematic diagram of an information flow between a UE and a gNB according to the embodiment. First, the gNB performs matching on the first AI model (AI-S) and the second AI model (AI-T). In a case that the matching is successful, the gNB sends the T1 and the T2 of the second AI model to the UE. After the matching is successful, the UE sends the beam measurement result within T1 to the gNB, for example via a data channel.

In the above example, the base station sends no indication message to the UE indicating whether the matching is successful. However, this is not restrictive, and the base station may send the indication message to the UE.

After the matching is successful, the first AI model may be kept silent within an output time window of the second AI model.

After the matching is successful, in a case that the first AI model and/or the second AI model triggers a supervision mechanism, if the supervision mechanism is executed by the base station, the communication unit 203 is configured to provide the UE with an execution period of the supervision mechanism, and if the supervision mechanism is executed by the UE, the communication unit 203 is configured to obtain the execution period of the supervision mechanism from the UE. The matching unit 201 is configured to keep an unsupervised AI model silent during the execution period.

### <Seventh Embodiment>

In the embodiment, the first AI model is disposed on one of the UE side and the base station side, the second AI model is disposed on the other one of the UE side and the base station side, and the matching unit 201 is configured to perform the matching through interaction with the UE via the communication unit 203. The matching is initiated by the UE.

For example, the UE determines an AI model to be used on the UE side, and sends a matching request to the base station. The matching request includes a model parameter or model index of the AI model to be used on the UE side. The communication unit 203 receives a matching request from the UE, and the matching unit 201 determines an AI model to be used on the base station side based on the matching request. The communication unit 203 sends, to the UE, a message indicating whether the matching is successful or unsuccessful.

In a case that the matching is successful, the communication unit 203 is further configured to send, to the UE, a model parameter or model index of the AI model to be used on the base station side. After the matching is successful, the reusing unit 202 reuses beam measurement results between the first AI model and the second AI model through the communication unit 203. After the matching is successful, the first AI model may be kept silent within an output time window of the second AI model.

In another aspect, in a case that the matching is unsuccessful, the communication unit 203 may be further configured to receive, from the UE, a message indicating whether the first AI model or the second AI model is to be selected. Alternatively, the communication unit 203 may receive no message and adopt a non-AI beam management mechanism, or receive a message, from the UE, indicating that a non-AI beam management mechanism is to be adopted.

In a first example, the first AI model is disposed on the UE side, and the second AI model is disposed on the base station side. In this case, the matching request may include a model parameter of the first AI model to be used on the UE side, such as an input parameter size and input and output parameter properties of the first AI model, or include a model index of the first AI model. On reception of the matching request, the base station may select a best second AI model that meets the requirements. In a case that such a second AI model can be found, the communication unit 203 on the base station side sends a message to the UE indicating that the matching is successful, such as a 1-bit message, and sends a model parameter or model index of the selected second AI model to the UE. The sent model parameter of the second AI model may at least include, for example, an input time window length and an output time window length, and a minimum number of measurements of historical data to be used. The UE side may determine, based on the minimum number of measurements, the number of execution times of scheduling the first AI model.

In a case that the matching is unsuccessful, if the UE is to select the first AI model, the message received by the communication unit 203 includes the model parameter or model index of the selected first AI model; and if the UE is to select the second AI model, the message received by the communication unit 203 includes information of a 1-bit notification for informing the base station to use the second AI model for beam prediction.

After the matching is successful, the UE performs spatial domain beam prediction using the first AI model, and the communication unit 203 is further configured to receive, from the UE, a beam measurement result within the input time window length of the second AI model in a single-time or multiple-time manner, so that the second AI model performs beam prediction using the beam measurement result. The communication unit 203 may receive the beam measurement result and a prediction result of the first AI model through the data channel.

Examples of an information flow between the UE and the gNB in the first example may be referred to FIG. 4 and FIG. 5, and are not repeated here.

In a second example, the second AI model is disposed on the UE side, and the first AI model is disposed on the base station side. In this case, the matching request may include a model parameter of the second AI model to be used on the UE side, such as an input time window length and an output time window length, an input parameter size and input and output parameter properties of the second AI model, or include a model index of the second AI model. On reception of the matching request, the base station may select a best first AI model that meets the requirements. In a case that such a first AI model can be found, the communication unit 203 on the base station sends a message to the UE indicating that the matching is successful, such as a 1-bit message. In addition, in a case that the input of the first AI model requires more extension information, for example, the input parameter size of the first AI model is greater than the input parameter size of the second AI model, the communication unit 203 further needs to send this information to the UE. For example, the communication unit 203 may send, to the UE, a model parameter or model index of the first AI model to be used on the base station side. The model parameter of the first AI model includes, for example, the input parameter size of the first AI model.

In a case that the matching is unsuccessful, if the UE is to select the second AI model, the message received by the communication unit 203 from the UE includes the model parameter or model index of the selected second AI model; and if the UE is to select the first AI model, the message received by the communication unit 203 from the UE includes information of a 1-bit notification for informing the base station to use the first AI model for beam prediction.

Examples of an information flow between the UE and the gNB in the second example may be referred to FIG. 6 and FIG. 7, and are not repeated here.

In addition, after the matching is successful, in a case that the first AI model and the second AI model trigger a supervision mechanism, if the supervision mechanism is executed by the UE, the communication unit 203 obtains an execution period of the supervision mechanism from the UE, and if the supervision mechanism is executed by the base station, the communication unit 203 provides the UE with the execution period of the supervision mechanism. In a case that an AI model on the UE side triggers a supervision mechanism, the matching unit 201 is configured to keep an AI model on the base station side silent during the execution period.

Similarly, after the matching is successful, in a case of occurrence of switching of the first AI model and/or the second AI model, the matching is re-performed between the UE and the base station.

### <Eighth Embodiment>

In the embodiment, similar to the seventh embodiment, the first AI model is disposed on one of the UE side and the base station side, the second AI model is disposed on the other one of the UE side and the base station side, and the matching unit 201 is configured to perform the matching through interaction with the UE via the communication unit 203. Unlike the seventh embodiment, the matching here is initiated by the base station.

For example, the base station determines an AI model to be used on the base station side in the matching, and the communication unit 203 includes a model parameter or model index of the determined AI model in a matching request and sends the matching request to the UE. Hence, the UE determines the AI model to be used on the UE side based on the model parameter or model index. The communication unit 203 is further configured to receive, from the UE, a message indicating whether the matching is successful or unsuccessful.

In a case that the matching is successful, the communication unit 203 is further configured to receive, from the UE, a model parameter or model index of the AI model on the UE side. After the matching is successful, the reusing unit 202 reuses beam measurement results between the first AI model and the second AI model through the communication unit 203. After the matching is successful, the first AI model may be kept silent within an output time window of the second AI model.

In another aspect, in a case that the matching is unsuccessful, the communication unit 203 is further configured to send, to the UE, a message indicating whether the first AI model or the second AI model is to be selected. Alternatively, the communication unit 203 may send no message and adopt a non-AI beam management mechanism, or send a message to the UE indicating that a non-AI beam management mechanism is to be adopted.

In a first example, the first AI model is disposed on the UE side, and the second AI model is disposed on the base station side. In this case, the matching request may include one or more of the following model parameters of the second AI model to be used on the base station side: an input time window length and an output time window length, an input parameter size, input and output parameter properties, and a minimum number of measurements of historical data to be used. Alternatively, the matching request may include a model index of the second AI model. On reception of the matching request, the UE may select a best first AI model that meets the requirements. In a case that such a first AI model can be found, the UE sends a message to the base station indicating that the matching is successful, such as a 1-bit message. Correspondingly, the communication unit 203 receives, from the UE, the message indicating that the matching is successful. In addition, in a case that the input parameter size of the first AI model is greater than an input parameter size of the second AI model, the communication unit 203 further receives, from the UE, the model parameter (such as an input parameter size) or model index of the first AI model.

In a case that the matching is unsuccessful, if the base station is to select the first AI model, the message sent by the communication unit 203 to the UE includes a 1-bit notification for informing the UE to use the first AI model for beam prediction; if the base station is to select the second AI model, the message sent by the communication unit 203 to the UE includes the model parameter or model index of the selected second AI model.

After the matching is successful, the UE performs spatial domain beam prediction using the first AI model, and the communication unit 203 is further configured to receive, from the UE, a beam measurement result within the input time window length of the second AI model in a single-time or multiple-time manner, so that the second AI model performs beam prediction using the beam measurement result. The communication unit 203 may receive the beam measurement result and a prediction result of the first AI model through the data channel.

Examples of an information flow between the UE and the gNB in the first example may be referred to FIG. 8 and FIG. 9, and are not repeated here.

In a second example, the second AI model is disposed on the UE side, and the first AI model is disposed on the base station side. In this case, the matching request may include a model parameter of the first AI model to be used on the base station side, such as an input parameter size and input and output parameter properties of the first AI model, or include a model index of the first AI model. On reception of the matching request, the UE may select a best second AI model that meets the requirements. In a case that such a second AI model can be found, the UE sends a message to the base station indicating that the matching is successful, such as a 1-bit message. Correspondingly, the communication unit 203 receives, from the UE, the message indicating that the matching is successful. In addition, the communication unit 203 further receives, from the UE, a model parameter or model index of the second AI model selected by the UE. The model parameter of the second AI model may include, for example, at least an input time window length and an output time window length.

In a case that the matching is unsuccessful, if the base station is to select the first AI model, the message sent by the communication unit 203 to the UE includes the model parameter or model index of the selected first AI model; and if the base station is to select the second AI model, the message sent by the communication unit 203 to the UE includes information of a 1-bit notification for informing the UE to use the second AI model for beam prediction.

Examples of an information flow between the UE and the gNB in the second example may be referred to FIG. 10 and FIG. 11, and are not repeated here.

In addition, in the embodiment, after the matching is successful, in a case that the first AI model and the second AI model trigger a supervision mechanism, if the supervision mechanism is executed by the UE, the communication unit 203 obtains an execution period of the supervision mechanism from the UE, and if the supervision mechanism is executed by the base station, the communication unit 203 provides the UE with the execution period of the supervision mechanism. In a case that an AI model on the UE side triggers a supervision mechanism, the matching unit 201 is configured to keep an AI model on the base station side silent during the execution period.

Similarly, after the matching is successful, in a case of occurrence of switching of the first AI model and/or the second AI model, the matching is re-performed between the UE and the base station.

### <Ninth Embodiment>

In the description of the electronic apparatuses for wireless communications in the above embodiments, some processes or methods are further disclosed. Hereinafter, an overview of the methods is given without repeating some of details discussed above. It should be noted that although disclosed in the description of the electronic apparatuses for wireless communications, the methods do not necessarily adopt the components as described or be performed by those components. For example, an embodiment of the electronic apparatus for wireless communications may be implemented partially or entirely using hardware and/or firmware, while a method for wireless communications discussed below may be implemented entirely by a computer-executable program, although the method may employ the hardware and/or firmware for the electronic apparatus for wireless communications.

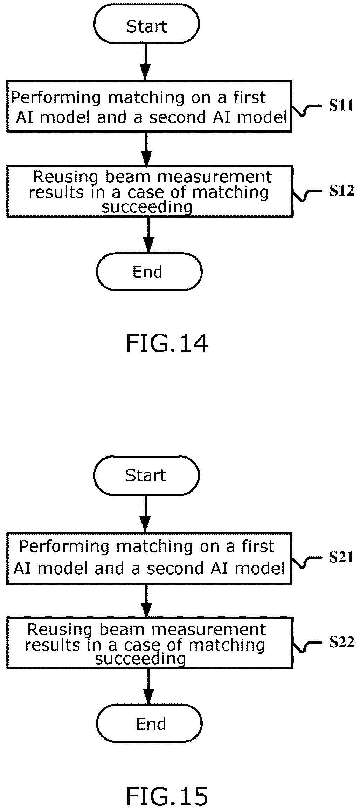

FIG. 14 illustrates a flow chart of a method for a user equipment side of wireless communications according to an embodiment of the present disclosure. The method includes: performing matching on a first AI model for performing spatial domain beam prediction and a second AI model for performing time domain beam prediction (S11); and in a case of matching succeeding, reusing beam measurement results between the first AI model and the second AI model (S12). The method may be performed on the UE side, for example.

For example, the matching is successful in a case that an input beam set for the first AI model contains an input beam set for the second AI model and input parameter properties of the first AI model contain input parameter properties of the second AI model. The input parameter properties include at least one of a reference signal receiving power and a channel impulse response. The reused beam measurement result includes, for example, at least a part of measurement results with respect to beams in the input beam set for the first AI model.

After the matching is successful, in a case of occurrence of switching of the first AI model and/or the second AI model, the matching is re-performed.

Based on locations of the first AI model and the second AI model and an initiator of the matching, there may be four scenarios. In a first scenario, the first AI model and the second AI model are both disposed on the UE side. In a second scenario, the first AI model is disposed on one of the UE side and the base station side, and the second AI model is disposed on the other one of the UE side and the base station side, and the matching is initiated by the UE. In a third scenario, the first AI model is disposed on one of the UE side and the base station side, and the second AI model is disposed on the other one of the UE side and the base station side, and the matching is initiated by the base station. In a fourth scenario, the first AI model and the second AI model are both disposed on the base station side.

In the first scenario, matching is performed in step S11 based on a model parameter of the first AI model and a model parameter of the second AI model, to determine whether the matching is successful. Although not shown in the figure, the method may further include a step of sending, to the base station, a message indicating whether the matching is successful or unsuccessful. In a case that the matching is successful, the method further includes: sending, to the base station, a model parameter or model index of the second AI model. The sent model parameter of the second AI model includes, for example, one or more of the following: an input time window length and an output time window length, an input parameter size, and input and output parameter properties of the second AI model. In a case that the matching is unsuccessful, the method further includes: determining to use one of the first AI model and the second AI model; and sending, to the base station, a model parameter or model index of the AI model to be used.

After the matching is successful, in a case that the first AI model and/or the second AI model triggers a supervision mechanism, the method further includes: obtaining an execution period of the supervision mechanism, and keeping an unsupervised AI model silent during the execution period.

The above method in the first scenario corresponds to the electronic apparatus 100 in the second embodiment. Reference can be made to description of the second embodiment for specific details of the method, which is not repeated here.

In the second scenario, the matching is performed in step S11 through interaction with the base station. For example, step S11 includes: determining an AI model to be used on the UE side; sending a matching request to the base station, enabling the base station to determine a second AI model to be used on the base station side based on the matching request; and receiving, from the base station, a message indicating whether the matching is successful or unsuccessful, to determine whether the matching is successful based on the message.

The matching request includes, for example, a model parameter of the AI model to be used on the UE side. In a case that the first AI model is disposed on the UE side, the matching request includes an input parameter size and input and output parameter properties of the first AI model. In a case that the second AI model is disposed on the UE side, the matching request may include an input time window length and an output time window length, an input parameter size, and input and output parameter properties of the second AI model. Alternatively, the matching request may further include a model index of the AI model to be used on the UE side.

In a case that the matching is successful, the method further includes receiving, from the base station, a model parameter of the AI model to be used by the base station. In a case that the first AI model is disposed on the base station side, the received model parameter includes an input parameter size of the first AI model. In a case that the second AI model is disposed on the base station side, the received model parameter includes at least: an input time window length and an output time window length, and a minimum number of measurements of historical data to be used. Alternatively, a model index of the AI model to be used by the base station may be further received from the base station.

In a case that the matching is unsuccessful, the method further includes sending, to the base station, a message indicating whether the first AI model or the second AI model is to be selected. In a case that the first AI model is disposed on the UE side, if the first AI model is to be selected, the message includes the model parameter or model index of the selected first AI model, and if the second AI model is to be selected, the message includes a one-bit notification. In a case that the second AI model is disposed on the UE side, if the second AI model is to be selected, the message includes the model parameter or model index of the selected second AI model, and if the first AI model is to be selected, the message includes information of a one-bit notification.

The above method in the second scenario corresponds to the electronic apparatus 100 in the third embodiment. Reference can be made to description of the third embodiment for specific details of the method, which is not repeated here.

In the third scenario, for example, step S11 includes: receiving a matching request from the base station, the matching request including a model parameter or model index of an AI model determined, by the base station, to be used in the matching; determining, based on the received model parameter or model index, an AI model to be used by the UE in the matching; and sending, to the base station, a message indicating whether the matching is successful or unsuccessful.

In a case that the first AI model is disposed on the UE side, the received model parameter includes one or more of the following model parameters of the second AI model: an input time window length and an output time window length, an input parameter size, input and output parameter properties, and a minimum number of measurements of historical data to be used. In a case that the second AI model is disposed on the UE side, the received model parameter includes at least an input parameter size and input and output parameter properties of the first AI model.

In a case that the matching is successful, the method further includes sending, to the base station, a model parameter or model index of an AI model determined by the UE side to be used. In a case that the first AI model is disposed on the UE side, the input parameter size of the first AI model may be sent to the base station. In a case that the second AI model is disposed on the UE side, the input time window length and the output time window length of the second AI model may be sent to the base station.

In a case that the matching is unsuccessful, the method further includes receiving, from the base station, a message indicating whether the first AI model or the second AI model is to be selected. In a case that the first AI model is disposed on the UE side and the first AI model is to be selected, the message includes information of a one-bit notification. In a case that the first AI model is disposed on the UE side and the second AI model is to be selected, the message includes a model parameter or model index of the selected second AI model. In a case that the second AI model is disposed on the UE side and the first AI model is to be selected, the message includes a model parameter or model index of the selected first AI model. In a case that the second AI model is disposed on the UE side and the second AI model is to be selected, the message includes information of a one-bit notification.

The above method in the third scenario corresponds to the electronic apparatus 100 in the fourth embodiment. Reference can be made to description of the fourth embodiment for specific details of the method, which is not repeated here.

In addition, in the second scenario and the third scenario, in a case that the first AI model is disposed on the UE side and the second AI model is disposed on the base station side, after the matching is successful, the method may further include: reporting, to the base station, a beam measurement result within an input time window length of the second AI model in a single-time or multiple-time manner, so that the second AI model performs beam prediction using the beam measurement result. For example, the beam measurement result and a prediction result of the first AI model may be reported through a data channel. After the matching is successful, in a case that the first AI model and/or the second AI model triggers a supervision mechanism, if the supervision mechanism is executed by the UE, an execution period of the supervision mechanism is provided to the base station; and if the supervision mechanism is executed by the base station, the execution period of the supervision mechanism is obtained from the base station. In a case that an AI model on the base station side triggers a supervision mechanism, the method further includes keeping an AI model on the UE side silent during the execution period.

FIG. 15 illustrates a flow chart of a method for a base station side of wireless communications according to another embodiment of the present disclosure. The method includes: performing matching on a first AI model for performing spatial domain beam prediction and a second AI model for performing time domain beam prediction (S21); and in a case of matching succeeding, reusing beam measurement results between the first AI model and the second AI model (S22). The method may be performed on a base station side, for example.

Similarly, for example, the matching is successful in a case that an input beam set for the first AI model contains an input beam set for the second AI model and input parameter properties of the first AI model contain input parameter properties of the second AI model. The input parameter properties include at least one of a reference signal receiving power and a channel impulse response. The reused beam measurement result includes, for example, at least a part of measurement results with respect to beams in the input beam set for the first AI model.

After the matching is successful, in a case of occurrence of switching of the first AI model and/or the second AI model, the matching is re-performed. Relevant details may be referred to the description in the fifth embodiment and is not repeated here.

The method is described here by taking the first to fourth scenarios defined above as examples.

In the fourth scenario, matching is performed in step S21 based on a model parameter of the first AI model and a model parameter of the second AI model, to determine whether the matching is successful.

In a case that the matching is successful, the method further includes: sending, to the UE, an input time window length and an output time window length of the second AI model. After the matching is successful, in a case that the first AI model and/or the second AI model triggers a supervision mechanism, if the supervision mechanism is executed by the base station, an execution period of the supervision mechanism is provided to the UE; and if the supervision mechanism is executed by the UE, the execution period of the supervision mechanism is obtained from the UE.

The above method in the fourth scenario corresponds to the electronic apparatus 200 in the sixth embodiment. Reference can be made to description of the sixth embodiment for specific details of the method, which is not repeated here.

In the second scenario, the matching is performed in step S21 through interaction with the UE. For example, step S21 may include: receiving a matching request from the UE, the matching request including a model parameter or model index of an AI model determined, by the UE, to be used on the UE side; determining, based on the matching request, an AI model to be used on the base station side; and sending, to the UE, a message indicating whether the matching is successful or unsuccessful.

In a case that the first AI model is disposed on the UE side, the matching request may include an input parameter size and input and output parameter properties of the first AI model. In a case that the second AI model is disposed on the UE side, the matching request may include an input time window length and an output time window length, an input parameter size, and input and output parameter properties of the second AI model.

In a case that the matching is successful, the method further includes sending, to the UE, a model parameter of the AI model to be used on the base station side. In a case that the first AI model is disposed on the base station side, the sent model parameter includes an input parameter size of the first AI model. In a case that the second AI model is disposed on the base station side, the sent model parameter includes at least: an input time window length and an output time window length, and a minimum number of measurements of historical data to be used. Alternatively, the method may further include sending, to the UE, a model index of the AI model to be used on the base station side.

In a case that the matching is unsuccessful, the method further includes receiving, from the UE, a message indicating whether the first AI model or the second AI model is to be selected. In a case that the first AI model is disposed on the UE side and the first AI model is to be selected, the message includes a model parameter or model index of the selected first AI model. In a case that the first AI model is disposed on the UE side and the second AI model is to be selected, the message includes information of a one-bit notification. In a case that the second AI model is disposed on the UE side and the first AI model is to be selected, the message includes information of a one-bit notification. In a case that the second AI model is disposed on the UE side and the second AI model is to be selected, the message includes a model parameter or model index of the selected second AI model.

The above method in the second scenario corresponds to the electronic apparatus 200 in the seventh embodiment. Reference can be made to description of the seventh embodiment for specific details of the method, which is not repeated here.

In the third scenario, the matching is performed in step S21 through interaction with the UE. For example, step S21 may include: determining an AI model to be used on the base station side in the matching; including a model parameter or model index of the determined AI model in a matching request and sending the matching request to the UE, enabling the UE to determine the AI model to be used on the UE side based on the model parameter or model index; and receiving, from the UE, a message indicating whether the matching is successful or unsuccessful.

In a case that the first AI model is disposed on the UE side, the sent model parameter includes one or more of the following model parameters of the second AI model: an input time window length and an output time window length, an input parameter size, input and output parameter properties, and a minimum number of measurements of historical data to be used. In a case that the second AI model is disposed on the UE side, the sent model parameter includes at least an input parameter size and input and output parameter properties of the first AI model.

In a case that the matching is successful, the method further includes receiving, from the UE, a model parameter or model index of an AI model to be used by the UE. In a case that the first AI model is disposed on the UE side, the received model parameter may include the input parameter size of the first AI model. In a case that the second AI model is disposed on the UE side, the received model parameter may include the input time window length and the output time window length of the second AI model.

In a case that the matching is unsuccessful, the method further includes sending, to the UE, a message indicating whether the first AI model or the second AI model is to be selected. In a case that the first AI model is disposed on the UE side and the first AI model is to be selected, the message includes information of a one-bit notification. In a case that the first AI model is disposed on the UE side and the second AI model is to be selected, the message includes a model parameter or model index of the selected second AI model. In a case that the second AI model is disposed on the UE side and the first AI model is to be selected, the message includes a model parameter or model index of the selected first AI model. In a case that the second AI model is disposed on the UE side and the second AI model is to be selected, the message includes information of a one-bit notification.

The above method in the third scenario corresponds to the electronic apparatus 200 in the eighth embodiment. Reference can be made to description of the eighth embodiment for specific details of the method, which is not repeated here.

In addition, in the second scenario and the third scenario, in a case that the first AI model is disposed on the UE side and the second AI model is disposed on the base station side, after the matching is successful, the method further includes: receiving, from the UE, a beam measurement result within an input time window length of the second AI model in a single-time or multiple-time manner, so that the second AI model performs beam prediction using the beam measurement result. For example, the beam measurement result and a prediction result of the first AI model may be received through a data channel.

After the matching is successful, in a case that the first AI model and/or the second AI model triggers a supervision mechanism, if the supervision mechanism is executed by the UE, an execution period of the supervision mechanism is obtained from the UE, and if the supervision mechanism is executed by the base station, the execution period of the supervision mechanism is provided to the UE. In a case that an AI model on the UE side triggers a supervision mechanism, the method further includes keeping an AI model on the base station side silent during the execution period.

It is to be noted that the above methods can be used in combination or alone.

The technology of the present disclosure is applicable to various products.

For example, the electronic apparatus 100 may be implemented as various user equipments. The user equipment may be implemented as a mobile terminal (such as a smart phone, a tablet personal computer (PC), a notebook PC, a portable game terminal, a portable/dongle-type mobile router, and a digital camera) or a vehicle-mounted terminal (such as an automobile navigation device). The user equipment may be implemented as a terminal that performs machine-to-machine (M2M) communications (which is also referred to as a machine type communication (MTC) terminal). Furthermore, the user equipment may be a wireless communication module (such as an integrated circuit module including a single wafer) installed on each of the above-mentioned terminals.

The electronic apparatus 200 may be implemented as various base stations. The base station may be implemented as any type of evolved Node B (eNB) or gNB (5G base station). An eNB includes, for example, a macro eNB and a small eNB. The small eNB may be an eNB covering a cell smaller than a macro cell, such as a pico eNB, a micro eNB, or a home (femto) eNB. A similar situation may apply to the gNB. Alternatively, the base station may be implemented as any other type of base station, such as a NodeB or a base transceiver station (BTS). The base station may include a body (which is also referred to as a base station device) configured to control wireless communications and one or more remote radio heads (RRHs) arranged at a different place from the body. In addition, various type of user equipment may serve as a base station by temporarily or semi-permanently performing functions of the base station.

### [Application example regarding base station]

### (First Application Example)

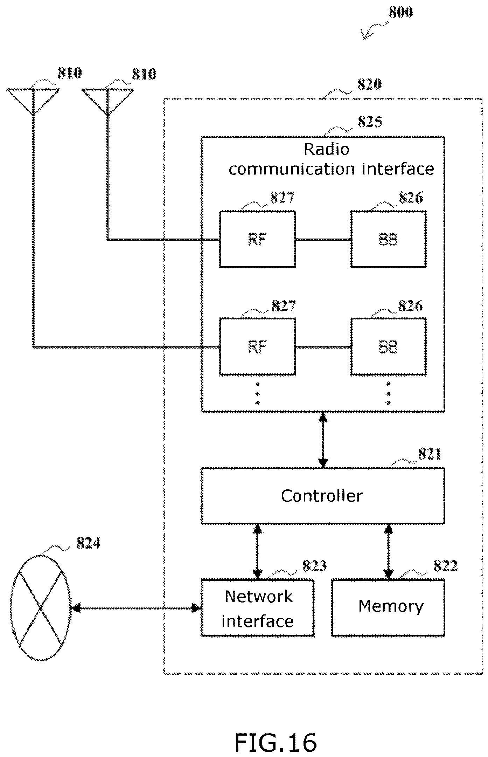

Figure 16 is a block diagram showing a first example of a schematic configuration of an eNB or gNB to which the technology according to the present disclosure may be applied. It should be noted that, the following description is given with an example of an eNB, but is also applicable to a gNB. An eNB 800 includes one or more antennas 810 and a base station apparatus 820. The base station apparatus 820 may be connected to each of the one or more antennas 810 via an RF cable.

Each of the antennas 810 includes one or more antenna elements (such as multiple antenna elements included in a multiple-input multiple-output (MIMO) antenna), and is configured to transmit and receive a wireless signal by the base station apparatus 820. The eNB 800 may include the multiple antennas 810, as shown in Figure 16. For example, the multiple antennas 810 may be compatible with multiple frequency bands used by the eNB 800. Although Figure 16 illustrates the example in which the eNB 800 includes the multiple antennas 810, the eNB 800 may also include a single antenna 810.

The base station apparatus 820 includes a controller 821, a memory 822, a network interface 823, and a radio communication interface 825.

The controller 821 may be, for example, a CPU or a DSP, and operates various functions of a higher layer of the base station apparatus 820. For example, the controller 821 generates a data packet from data in a signal processed by the radio communication interface 825, and transmits the generated packet via the network interface 823. The controller 821 may bundle data from multiple base band processors to generate the bundled packet, and transfer the generated bundled packet. The controller 821 may have logical functions of performing control such as wireless resource control, radio bearer control, mobility management, admission control, and scheduling. The control may be performed in corporation with a nearby eNB or core network node. The memory 822 includes an RAM and an ROM, and stores a program executed by the controller 821 and various types of control data (such as a terminal list, transmission power data and scheduling data).

The network interface 823 is a communication interface for connecting the base station apparatus 820 to a core network 824. The controller 821 may communicate with a core network node or another eNB via the network interface 823. In that case, the eNB 800, and the core network node or the other eNB may be connected to each other through a logical interface (such as an S1 interface and an X2 interface). The network interface 823 may be a wired communication interface or a wireless communication interface for a wireless backhaul line. If the network interface 823 is a wireless communication interface, the network interface 823 may use a higher frequency band for wireless communication than the radio communication interface 825.

The radio communication interface 825 supports any cellular communication scheme (such as Long Term Evolution (LTE) and LTE-Advanced), and provides wireless connection to a terminal located in a cell of the eNB 800 via the antenna 810. The radio communication interface 825 may generally include, for example, a baseband (BB) processor 826 and an RF circuit 827. The BB processor 826 may perform, for example, encoding/decoding, modulating/demodulating, and multiplexing/de-multiplexing, and perform various types of signal processing of layers (such as L1, medium access control (MAC), radio link control (RLC), and packet data convergence protocol (PDCP)). The BB processor 826 may have a part or all of the above-described logical functions instead of the controller 821. The BB processor 826 may be a memory storing communication control programs, or a module including a processor and a related circuit that are configured to execute programs. Updating the programs may cause changes of the function of the BB processor 826. The module may be a card or a blade that is inserted into a slot of the base station apparatus 820. Alternatively, the module may also be a chip that is mounted on the card or the blade. The RF circuit 827 may include, for example, a mixer, a filter and an amplifier, and transmit and receive a wireless signal via the antenna 810.

As shown in Figure 16, the radio communication interface 825 may include multiple BB processors 826. For example, the multiple BB processors 826 may be compatible with multiple frequency bands used by the eNB 800. The radio communication interface 825 may include multiple RF circuits 827, as shown in Figure 16. For example, the multiple RF circuits 827 may be compatible with multiple antenna elements. Although Figure 16 shows an example in which the radio communication interface 825 includes the multiple BB processors 826 and the multiple RF circuits 827, the radio communication interface 825 may also include a single BB processor 826 and a single RF circuit 827.

In the eNB 800 as shown in FIG. 16, the communication unit 203 and the transceiver of the electronic apparatus 200 may be implemented by the radio communication interface 825. At least a part of the functions may be implemented by the controller 821. For example, the controller 821 may perform the matching on the two functional types of AI models for beam prediction by executing functions of the matching unit 201, the reusing unit 202 and the communication unit 203, so that the beam measurement results can be reused and overhead for beam measurement can be further reduced.

### (Second Application Example)

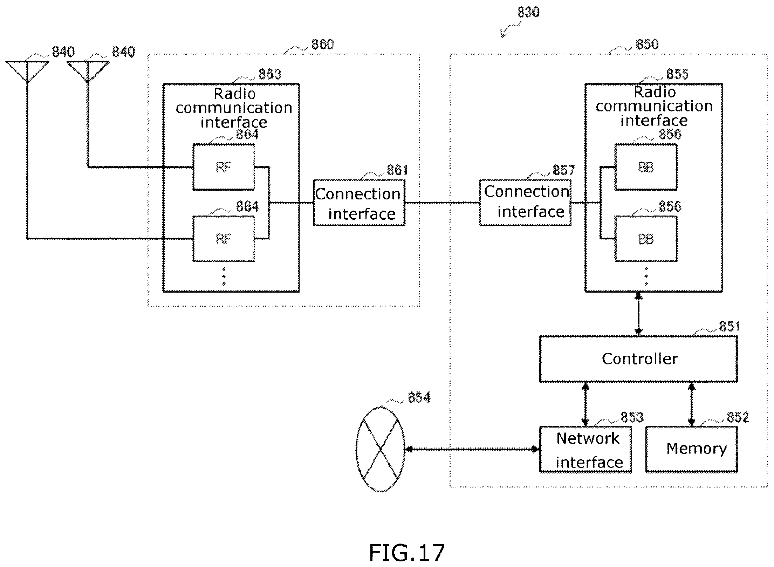

Figure 17 is a block diagram showing a second example of a schematic configuration of an eNB or a gNB to which the technology according to the present disclosure may be applied. It should be noted that the following description is given with an example of the eNB, but is also applicable to the gNB. An eNB 830 includes a single or multiple antennae 840, a base station apparatus 850 and an RRH 860. The RRH 860 and each of the antennae 840 may be connected to each other via an RF cable. The base station apparatus 850 and the RRH 860 may be connected to each other via a high speed line such as an optical fiber cable.

Each of the antennas 840 includes a single or multiple antenna elements (such as multiple antenna elements included in a MIMO antenna), and is for the RRH 860 to transmit and receive a wireless signal. As shown in Figure 17, the eNB 830 may include multiple antennae 840. For example, the multiple antennae 840 may be compatible with multiple frequency bands used by the eNB 830. Although Figure 17 illustrates an example in which the eNB 830 includes multiple antennae 840, the eNB 830 may also include a single antenna 840.

The base station apparatus 850 includes a controller 851, a memory 852, a network interface 853, a radio communication interface 855, and a connection interface 857. The controller 851, the memory 852, and the network interface 853 are the same as the controller 821, the memory 822, and the network interface 823 described with reference to Figure 16.

The radio communication interface 855 supports any cellular communication scheme (such as LTE and LTE-advanced), and provides wireless communication with a terminal located in a sector corresponding to the RRH 860 via the RRH 860 and the antenna 840. The radio communication interface 855 may typically include, for example, a BB processor 856. The BB processor 856 is the same as the BB processor 826 described with reference to Figure 16, except that the BB processor 856 is connected to an RF circuit 864 of the RRH 860 via the connection interface 857. As shown in Figure 17, the radio communication interface 855 may include multiple BB processors 856. For example, the multiple BB processors 856 may be compatible with multiple frequency bands used by the eNB 830. Although Figure 17 shows an example in which the radio communication interface 855 includes the multiple BB processors 856, the radio communication interface 855 may include a single BB processor 856.

The connection interface 857 is an interface for connecting the base station apparatus 850 (radio communication interface 855) to the RRH 860. The connection interface 857 may also be a communication module for communication in the above-described high-speed line via which the base station apparatus 850 (radio communication interface 855) is connected to the RRH 860.

The RRH 860 includes a connection interface 861 and a radio communication interface 863.

The connection interface 861 is an interface for connecting the RRH 860 (the radio communication interface 863) to the base station apparatus 850. The connection interface 861 may be a communication module for the communication in the above high-speed line.

The radio communication interface 863 transmits and receives a wireless signal via the antenna 840. The radio communication interface 863 may generally include, for example, the RF circuit 864. The RF circuit 864 may include, for example, a mixer, a filter, and an amplifier, and transmits and receives wireless signals via the antenna 840. The radio communication interface 863 may include multiple RF circuits 864, as shown in Figure 17. For example, the multiple RF circuits 864 may support multiple antenna elements. Although Figure 17 shows an example in which the radio communication interface 863 includes multiple RF circuits 864, the radio communication interface 863 may include a single RF circuit 864.

In the eNB 830 as shown in FIG. 17, the communication unit 203 and the transceiver of the electronic apparatus 200 may be implemented by the radio communication interface 855 and/or the radio communication interface 863. At least a part of the functions may be implemented by the controller 851. For example, the controller 851 may perform the matching on the two functional types of AI models for beam prediction by executing functions of the matching unit 201, the reusing unit 202 and the communication unit 203, so that the beam measurement results can be reused and overhead for beam measurement can be further reduced.

### [Application examples regarding user equipment]

### (First Application Example)

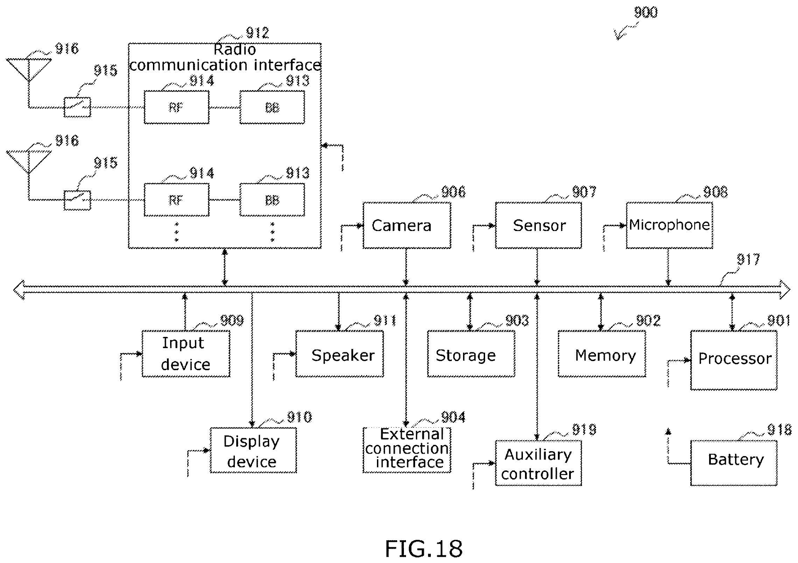

Figure 18 is a block diagram showing an example of a schematic configuration of a smartphone 900 to which the technology according to the present disclosure may be applied. The smartphone 900 includes a processor 901, a memory 902, a storage 903, an external connection interface 904, a camera 906, a sensor 907, a microphone 908, an input device 909, a display device 910, a speaker 911, a radio communication interface 912, one or more antenna switches 915, one or more antennas 916, a bus 917, a battery 918 and an auxiliary controller 919.

The processor 901 may be, for example, a CPU or a system on chip (SoC), and control functions of an application layer and other layers of the smartphone 900. The memory 902 includes a RAM and a ROM, and stores a program executed by the processor 901 and data. The storage 903 may include a storage medium such as a semiconductor memory and a hard disk. The external connection interface 904 is an interface configured to connect an external apparatus (such as a memory card and a universal serial bus (USB) apparatus) to the smartphone 900.

The camera 906 includes an image sensor (such as a Charge Coupled Device (CCD) and a Complementary Metal Oxide Semiconductor (CMOS)) and generates a captured image. The sensor 907 may include a group of sensors such as a measurement sensor, a gyro sensor, a geomagnetic sensor, and an acceleration sensor. The microphone 908 converts sounds that are inputted to the smartphone 900 into audio signals. The input device 909 includes, for example, a touch sensor configured to detect touch onto a screen of the display device 910, a keypad, a keyboard, a button, or a switch, and receives an operation or information inputted from a user. The display device 910 includes a screen (such as a liquid crystal display (LCD) and an organic light-emitting diode (OLED) display), and displays an output image of the smartphone 900. The speaker 911 converts the audio signal outputted from the smartphone 900 into sound.

The radio communication interface 912 supports any cellular communication scheme (such as LTE and LTE-advanced), and performs wireless communication. The radio communication interface 912 may typically include, for example, a BB processor 913 and an RF circuit 914. The BB processor 913 may perform, for example, encoding/decoding, modulating/demodulating and multiplexing/de-multiplexing, and perform various types of signal processing for wireless communication. Meanwhile, the RF circuit 914 may include, for example, a mixer, a filter and an amplifier, and transmit and receive a wireless signal via an antenna 916. It should be noted that although Figure 18 shows a case where one RF link is connected to one antenna, which is only illustrative and a case where one RF link is connected to multiple antennas through multiple phase shifters may exist. The radio communication interface 912 may be a chip module having a BB processor 913 and an RF circuit 914 integrated thereon. The radio communication interface 912 may include multiple BB processors 913 and multiple RF circuits 914, as shown in Figure 18. Although Figure 18 shows an example in which the radio communication interface 912 includes the multiple BB processors 913 and the multiple RF circuits 914, the radio communication interface 912 may also include a single BB processor 913 or a single RF circuit 914.

Furthermore, in addition to a cellular communication scheme, the radio communication interface 912 may support another type of wireless communication scheme such as a short-distance wireless communication scheme, a near field communication scheme, and a wireless local area network (LAN) scheme. In this case, the radio communication interface 912 may include a BB processor 913 and an RF circuit 914 for each wireless communication scheme.

Each of the antenna switches 915 switches connection destinations of the antennas 916 among multiple circuits (such as circuits for different wireless communication schemes) included in the radio communication interface 912.

Each of the antennae 916 includes a single or multiple antenna elements (such as multiple antenna elements included in an MIMO antenna), and is used for the radio communication interface 912 to transmit and receive wireless signals. As shown in Figure 18, the smartphone 900 may include multiple antennas 916. Although Figure 18 illustrates the example in which the smartphone 900 includes the multiple antennas 916, the smartphone 900 may also include a single antenna 916.

In addition, the smartphone 900 may include an antenna 916 for each wireless communication scheme. In this case, the antenna switch 915 may be omitted from the configuration of the smartphone 900.

The bus 917 connects the processor 901, the memory 902, the storage 903, the external connection interface 904, the camera 906, the sensor 907, the microphone 908, the input device 909, the display device 910, the speaker 911, the radio communication interface 912 and the auxiliary controller 919 with each other. The battery 918 supplies power to various blocks of the smartphone 900 as shown in Figure 18 via feeder lines which are partially shown as dashed lines in the figure. The auxiliary controller 919 manipulates a minimum necessary function of the smartphone 900 in a sleep mode, for example.

In the smartphone 900 as shown in FIG. 18, the communication unit 103 and the transceiver of the electronic apparatus 100 may be implemented by the radio communication interface 912. At least part of the functions may be implemented by the processor 901 or the auxiliary controller 919. For example, the processor 901 or the auxiliary controller 919 may perform the matching on the two functional types of AI models for beam prediction by executing functions of the matching unit 101, the reusing unit 102 and the communication unit 103, so that the beam measurement results can be reused and overhead for beam measurement can be further reduced.

### (Second Application Example)

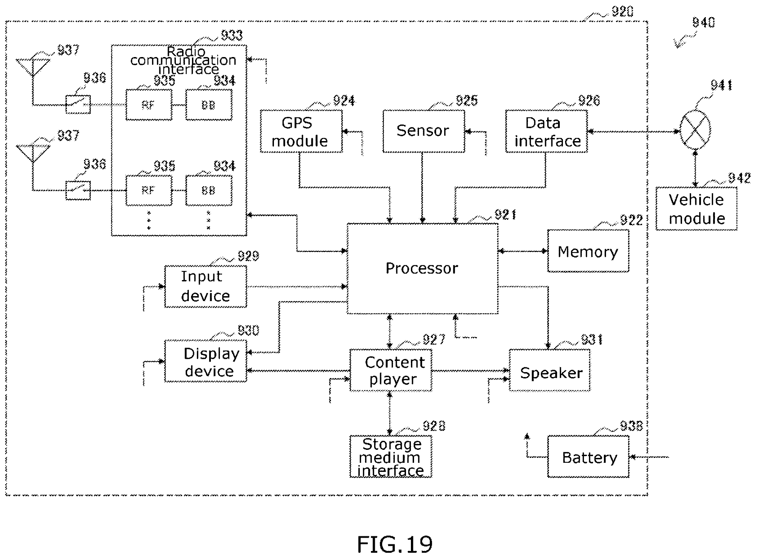

Figure 19 is a block diagram showing an example of a schematic configuration of a car navigation device 920 to which the technology according to the present disclosure may be applied. The car navigation device 920 includes a processor 921, a memory 922, a global positioning system (GPS) module 924, a sensor 925, a data interface 926, a content player 927, a storage medium interface 928, an input device 929, a display device 930, a speaker 931, a radio communication interface 933, one or more antenna switches 936, one or more antennas 937, and a battery 938.

The processor 921 may be, for example, a CPU or a SoC, and control a navigation function and an additional function of the car navigation device 920. The memory 922 includes RAM and ROM, and stores a program that is executed by the processor 921, and data.

The GPS module 924 determines a position (such as latitude, longitude, and altitude) of the car navigation device 920 by using GPS signals received from a GPS satellite. The sensor 925 may include a group of sensors such as a gyro sensor, a geomagnetic sensor, and an air pressure sensor. The data interface 926 is connected to an in-vehicle network 941 via a terminal not shown, and acquires data generated by the vehicle (such as vehicle speed data).

The content player 927 reproduces content stored in a storage medium (such as a CD and a DVD) that is inserted into the storage medium interface 928. The input device 929 includes, for example, a touch sensor configured to detect touch on a screen of the display device 930, a button, or a switch, and receives an operation or information inputted by a user. The display device 930 includes a screen such as a LCD or an OLED display, and displays an image of the navigation function or content that is reproduced. The speaker 931 outputs a sound with a navigation function or the reproduced content.

The radio communication interface 933 supports any cellular communication scheme (such as LTE and LTE-advanced) and performs wireless communication. The radio communication interface 933 may typically include, for example, a BB processor 934 and an RF circuit 935. The BB processor 934 may perform, for example, encoding/decoding, modulating/demodulating, and multiplexing/demultiplexing, and perform various types of signal processing for wireless communication. The RF circuit 935 may include, for example, a mixer, a filter and an amplifier, and transmit and receive a wireless signal via the antenna 937. The radio communication interface 933 may also be one chip module that has the BB processor 934 and the RF circuit 935 integrated thereon. The radio communication interface 933 may include multiple BB processors 934 and multiple RF circuits 935, as shown in Figure 19. Although Figure 19 shows an example in which the radio communication interface 933 includes the multiple BB processors 934 and the multiple RF circuits 935, the radio communication interface 933 may also include a single BB processor 934 and a single RF circuit 935.

Furthermore, in addition to a cellular communication scheme, the radio communication interface 933 may support another type of wireless communication scheme such as a short-distance wireless communication scheme, a near field communication scheme, and a wireless LAN scheme. In that case, the radio communication interface 933 may include the BB processor 934 and the RF circuit 935 for each wireless communication scheme.

Each of the antenna switches 936 switches connection destinations of the antennae 937 among multiple circuits (such as circuits for different wireless communication schemes) included in the radio communication interface 933.

Each of the antennae 937 includes a single or multiple antenna elements (such as multiple antenna elements included in an MIMO antenna), and is used for the radio communication interface 933 to transmit and receive wireless signals. The car navigation device 920 may include multiple antennae 937, as shown in Figure 19. Although Figure 19 illustrates the example in which the car navigation device 920 includes the multiple antennae 937, the car navigation device 920 may also include a single antenna 937.

In addition, the car navigation device 920 may include an antenna 937 for each wireless communication scheme. In this case, the antenna switch 936 may be omitted in the configuration of the car navigation device 920.

The battery 938 supplies power to various blocks of the car navigation device 920 shown in Figure 19 via a feeder line, which is partially shown with a dash line in the figure. The battery 938 accumulates power supplied from the vehicle.

In the car navigation device 920 as shown in FIG. 19, the communication unit 103 and the transceiver of the electronic apparatus 100 may be implemented by the radio communication interface 933. At least part of the functions may be implemented by the processor 921. For example, the processor 921 may perform the matching on the two functional types of AI models for beam prediction by executing functions of the matching unit 101, the reusing unit 102 and the communication unit 103, so that the beam measurement results can be reused and overhead for beam measurement can be further reduced.

The technology of the present disclosure may also be implemented as an in-vehicle system (or a vehicle) 940 including one or more blocks of the car navigation device 920, the in-vehicle network 941 and the vehicle module 942. The vehicle module 942 generates vehicle data (such as a vehicle speed, an engine speed, and fault information), and outputs the generated data to the in-vehicle network 941.

The basic principle of the present disclosure has been described above in conjunction with particular embodiments. However, as can be appreciated by those ordinarily skilled in the art, all or any of the steps or components of the method and apparatus according to the disclosure can be implemented with hardware, firmware, software or a combination thereof in any computing device (including a processor, a storage medium, etc.) or a network of computing devices by those ordinarily skilled in the art in light of the disclosure of the disclosure and making use of their general circuit designing knowledge or general programming skills.

Moreover, the present disclosure further discloses a program product in which machine-readable instruction codes are stored. The aforementioned methods according to the embodiments can be implemented when the instruction codes are read and executed by a machine.

Accordingly, a memory medium for carrying the program product in which machine-readable instruction codes are stored is also covered in the present disclosure. The memory medium includes but is not limited to soft disc, optical disc, magnetic optical disc, memory card, memory stick and the like.

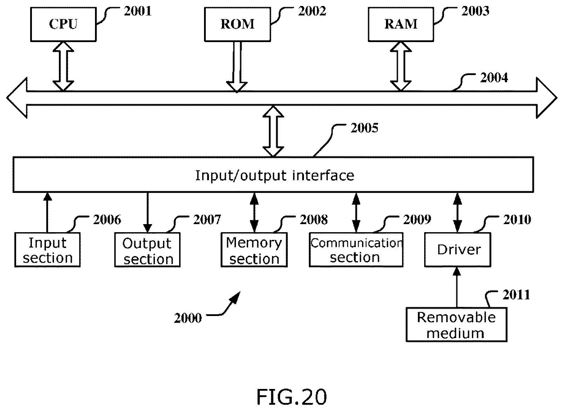

In the case where the present disclosure is realized with software or firmware, a program constituting the software is installed in a computer with a dedicated hardware structure (e.g. the general computer 2000 shown in Figure 20) from a storage medium or network, wherein the computer is capable of implementing various functions when installed with various programs.

In Figure 20, a central processing unit (CPU) 2001 executes various processing according to a program stored in a read-only memory (ROM) 2002 or a program loaded to a random access memory (RAM) 2003 from a memory section 2008. The data needed for the various processing of the CPU 2001 may be stored in the RAM 2003 as needed. The CPU 2001, the ROM 2002 and the RAM 2003 are linked with each other via a bus 2004. An input/output interface 2005 is also linked to the bus 2004.

The following components are linked to the input/output interface 2005: an input section 2006 (including keyboard, mouse and the like), an output section 2007 (including displays such as a cathode ray tube (CRT), a liquid crystal display (LCD), a loudspeaker and the like), a memory section 2008 (including hard disc and the like), and a communication section 2009 (including a network interface card such as a LAN card, modem and the like). The communication section 2009 performs communication processing via a network such as the Internet. A driver 2010 may also be linked to the input/output interface 2005, if needed. If needed, a removable medium 2011, for example, a magnetic disc, an optical disc, a magnetic optical disc, a semiconductor memory and the like, may be installed in the driver 2010, so that the computer program read therefrom is installed in the memory section 2008 as appropriate.

In the case where the foregoing series of processing is achieved through software, programs forming the software are installed from a network such as the Internet or a memory medium such as the removable medium 2011.

It should be appreciated by those skilled in the art that the memory medium is not limited to the removable medium 2011 shown in Figure 20, which has program stored therein and is distributed separately from the apparatus so as to provide the programs to users. The removable medium 2011 may be, for example, a magnetic disc (including floppy disc (registered trademark)), a compact disc (including compact disc read-only memory (CD-ROM) and digital versatile disc (DVD), a magneto optical disc (including mini disc (MD)(registered trademark)), and a semiconductor memory. Alternatively, the memory medium may be the hard discs included in ROM 2002 and the memory section 2008 in which programs are stored, and can be distributed to users along with the device in which they are incorporated.

To be further noted, in the apparatus, method and system according to the present disclosure, the respective components or steps can be decomposed and/or recombined. These decompositions and/or re-combinations shall be regarded as equivalent solutions of the disclosure. Moreover, the above series of processing steps can naturally be performed temporally in the sequence as described above but will not be limited thereto, and some of the steps can be performed in parallel or independently from each other.

Finally, to be further noted, the term "include", "comprise" or any variant thereof is intended to encompass nonexclusive inclusion so that a process, method, article or device including a series of elements includes not only those elements but also other elements which have been not listed definitely or an element(s) inherent to the process, method, article or device. Moreover, the expression "comprising a(n) ......" in which an element is defined will not preclude presence of an additional identical element(s) in a process, method, article or device comprising the defined element(s)" unless further defined.

Although the embodiments of the present disclosure have been described above in detail in connection with the drawings, it shall be appreciated that the embodiments as described above are merely illustrative rather than limitative of the present disclosure. Those skilled in the art can make various modifications and variations to the above embodiments without departing from the spirit and scope of the present disclosure. Therefore, the scope of the present disclosure is defined merely by the appended claims and their equivalents.

## Claims

1. An electronic apparatus for user equipment side of wireless communications, comprising:
processing circuitry, configured to:
perform matching on a first artificial intelligence (AI) model for performing spatial domain beam prediction and a second AI model for performing time domain beam prediction; and
in a case of matching succeeding, reuse beam measurement results between the first AI model and the second AI model.

2. The electronic apparatus according to claim 1, wherein, in a case that an input beam set for the first AI model contains an input beam set for the second AI model and input parameter properties for the first AI model contains input parameter properties for the second AI mode, the matching succeeds.

3. The electronic apparatus according to claim 2, wherein the input parameter properties comprise at least one of a reference signal receiving power and a channel impulse response.

4. The electronic apparatus according to claim 2, wherein the beam measurement results comprise at least a part of measurement results with respect to beams in the input beam set for the first AI model.

5. The electronic apparatus according to claim 1, wherein the first AI model and the second AI model are both disposed on the user equipment side, and the processing circuitry is configured to perform the matching based on model parameters for the first AI model and model parameters for the second AI model, to determine whether the matching succeeds.

6. The electronic apparatus according to claim 5, wherein the processing circuitry is further configured to send, to a base station, a message indicating whether the matching is successful or unsuccessful.

7. The electronic apparatus according to claim 6, wherein in a case that the matching is successful, the processing circuitry is further configured to send, to the base station, the model parameter or model index of the second AI model.

8. The electronic apparatus according to claim 7, wherein the model parameters of the second AI model comprise one or more of the following: an input time window length and an output time window length, an input parameter size, and input and output parameter properties of the second AI model.

9. The electronic apparatus according to claim 6, wherein in a case that the matching is unsuccessful, the processing circuitry is further configured to: determine to use one of the first AI model and the second AI model; and send, to the base station, a model parameter or model index of the AI model to be used.

10. The electronic apparatus according to claim 5, wherein after the matching is successful, in a case that the first AI model and/or the second AI model triggers a supervision mechanism, the processing circuitry is configured to obtain an execution period of the supervision mechanism and keep an unsupervised AI model silent during the execution period.

11. The electronic apparatus according to claim 1, after the matching is successful, in a case of occurrence of switching of the first AI model and/or the second AI model, the processing circuitry is configured to re-perform the matching.

12. The electronic apparatus according to claim 1, wherein the first AI model is disposed on one of the user equipment side and the base station side, the second AI model is disposed on the other one of the user equipment side and the base station side, and the processing circuitry is configured to perform the matching through interaction with the base station.

13. The electronic apparatus according to claim 12, wherein the processing circuitry is configured to perform the matching by:
determining an AI model to be used on the user equipment side;
sending a matching request to the base station, so that the base station determines an AI model to be used on the base station side based on the matching request; and
receiving, from the base station, a message indicating whether the matching is successful or unsuccessful, to determine whether the matching is successful based on the message.

14. The electronic apparatus according to claim 13, wherein the matching request comprises a model parameter or model index of the AI model to be used on the user equipment side,
wherein in a case that the first AI model is disposed on the user equipment side, the matching request comprises an input parameter size and input and output parameter properties of the first AI model, and
wherein in a case that the second AI model is disposed on the user equipment side, the matching request comprises an input time window length and an output time window length, an input parameter size, and input and output parameter properties of the second AI model.

15. The electronic apparatus according to claim 13, wherein the matching request comprises a model index of the AI model to be used on the user equipment side.

16. The electronic apparatus according to claim 13, wherein in a case that the matching is successful, the processing circuitry is further configured to receive, from the base station, a model parameter of the AI model to be used by the base station,
wherein in a case that the first AI model is disposed on the base station side, the received model parameter comprises an input parameter size of the first AI model, and
wherein in a case that the second AI model is disposed on the base station side, the received model parameter comprises at least: an input time window length and an output time window length, and a minimum number of measurements of historical data to be used.

17. The electronic apparatus according to claim 13, wherein in a case that the matching is successful, the processing circuitry is further configured to receive, from the base station, a model index of the AI model to be used by the base station.

18. The electronic apparatus according to claim 13, wherein in a case that the matching is unsuccessful, the processing circuitry is further configured to send, to the base station, a message indicating whether the first AI model or the second AI model is to be selected.

19. The electronic apparatus according to claim 18, wherein
in a case that the first AI model is disposed on the user equipment side and the first AI model is to be selected, the message comprises a model parameter or model index of the selected first AI model;
in a case that the first AI model is disposed on the user equipment side and the second AI model is to be selected, the message comprises information of a one-bit notification;
in a case that the second AI model is disposed on the user equipment side and the first AI model is to be selected, the message comprises information of a one-bit notification; and
in a case that the second AI model is disposed on the user equipment side and the second AI model is to be selected, the message comprises a model parameter or model index of the selected second AI model.

20. The electronic apparatus according to claim 12, wherein the processing circuitry is configured to perform the matching by:
receiving a matching request from the base station, the matching request comprising a model parameter or model index of an AI model determined, by the base station, to be used in the matching;
determining, based on the received model parameter or model index, an AI model to be used by the user equipment in the matching; and
sending, to the base station, a message indicating whether the matching is successful or unsuccessful.

21. The electronic apparatus according to claim 20, wherein
in a case that the first AI model is disposed on the user equipment side, the received model parameter comprises one or more of the following model parameters of the second AI model: an input time window length and an output time window length, an input parameter size, input and output parameter properties, and a minimum number of measurements of historical data to be used;
in a case that the second AI model is disposed on the user equipment side, the received model parameter comprises at least an input parameter size and input and output parameter properties of the first AI model.

22. The electronic apparatus according to claim 20, wherein in a case that the matching is successful,
in a case that the first AI model is disposed on the user equipment side, the processing circuitry is further configured to send an input parameter size of the first AI model to the base station; and
in a case that the second AI model is disposed on the user equipment side, the processing circuitry is further configured to send an input time window length and an output time window length of the second AI model to the base station.

23. The electronic apparatus according to claim 20, wherein in a case that the matching is unsuccessful, the processing circuitry is further configured to receive, from the base station, a message indicating whether the first AI model or the second AI model is to be selected.

24. The electronic apparatus according to claim 23, wherein
in a case that the first AI model is disposed on the user equipment side and the first AI model is to be selected, the message comprises information of a one-bit notification;
in a case that the first AI model is disposed on the user equipment side and the second AI model is to be selected, the message comprises a model parameter or model index of the selected second AI model;
in a case that the second AI model is disposed on the user equipment side and the first AI model is to be selected, the message comprises a model parameter or model index of the selected first AI model; and
in a case that the second AI model is disposed on the user equipment side and the second AI model is to be selected, the message comprises information of a one-bit notification.

25. The electronic apparatus according to claim 12, wherein in a case that the first AI model is disposed on the user equipment side and the second AI model is disposed on the base station side, after the matching is successful, the processing circuitry is further configured to report, to the base station, a beam measurement result within an input time window length of the second AI model in a single-time or multiple-time manner, so that the second AI model performs beam prediction using the beam measurement result.

26. The electronic apparatus according to claim 25, wherein the processing circuitry is configured to report the beam measurement result and a prediction result of the first AI model through a data channel.

27. The electronic apparatus according to claim 12, wherein after the matching is successful,
in a case that the first AI model and/or the second AI model triggers a supervision mechanism, if the supervision mechanism is executed by the user equipment, the processing circuitry is configured to provide the base station with an execution period of the supervision mechanism, and if the supervision mechanism is executed by the base station, the processing circuitry is configured to obtain the execution period of the supervision mechanism from the base station, and
wherein in a case that an AI model on the base station side triggers a supervision mechanism, the processing circuitry is further configured to keep an AI model on the user equipment side silent during the execution period.

28. An electronic apparatus for a base station side of wireless communications, comprising:
processing circuitry, configured to:
perform matching on a first artificial intelligence (AI) model for performing spatial domain beam prediction and a second AI model for performing time domain beam prediction; and
in a case of matching succeeding, reuse beam measurement results between the first AI model and the second AI model.

29. The electronic apparatus according to claim 20, wherein the first AI model and the second AI model are both disposed on the base station side, and the processing circuitry is configured to perform the matching based on model parameters for the first AI model and model parameters for the second AI model, to determine whether the matching succeeds.

30. The electronic apparatus according to claim 29, wherein in a case that the matching is successful, the processing circuitry is configured to send, to the user equipment, an input time window length and an output time window length of the second AI model.

31. The electronic apparatus according to claim 29, wherein after the matching is successful, in a case that the first AI model and/or the second AI model triggers a supervision mechanism, if the supervision mechanism is executed by the base station, the processing circuitry is configured to provide the user equipment with an execution period of the supervision mechanism, and if the supervision mechanism is executed by the user equipment, the processing circuitry is configured to obtain the execution period of the supervision mechanism from the user equipment.

32. The electronic apparatus according to claim 29, wherein after the matching is successful, in a case of occurrence of switching of the first AI model and/or the second AI model, the processing circuitry is configured to re-perform the matching.

33. The electronic apparatus according to claim 28, wherein the first AI model is disposed on one of the user equipment side and the base station side, the second AI model is disposed on the other one of the user equipment side and the base station side, and the processing circuitry is configured to perform the matching through interaction with the user equipment.

34. The electronic apparatus according to claim 33, wherein the processing circuitry is configured to perform the matching by:
receiving a matching request from the user equipment, the matching request comprising a model parameter or model index of an AI model determined, by the user equipment, to be used on the user equipment side;
determining an AI model to be used on the base station side based on the matching request; and
sending, to the user equipment, a message indicating whether the matching is successful or unsuccessful.

35. The electronic apparatus according to claim 34, wherein
in a case that the first AI model is disposed on the user equipment side, the matching request comprises an input parameter size and input and output parameter properties of the first AI model, and
in a case that the second AI model is disposed on the user equipment side, the matching request comprises an input time window length and an output time window length, an input parameter size, and input and output parameter properties of the second AI model.

36. The electronic apparatus according to claim 34, wherein in a case that the matching is successful, the processing circuitry is further configured to send, to the user equipment, a model parameter of the AI model to be used on the base station side,
wherein in a case that the first AI model is disposed on the base station side, the sent model parameter comprises an input parameter size of the first AI model, and
wherein in a case that the second AI model is disposed on the base station side, the sent model parameter comprises at least: an input time window length and an output time window length, and a minimum number of measurements of historical data to be used.

37. The electronic apparatus according to claim 34, wherein in a case that the matching is successful, the processing circuitry is further configured to send, to the user equipment, a model index of the AI model to be used on the base station side.

38. The electronic apparatus according to claim 34, wherein in a case that the matching is unsuccessful, the processing circuitry is further configured to receive, from the user equipment, a message indicating whether the first AI model or the second AI model is to be selected.

39. The electronic apparatus according to claim 38, wherein
in a case that the first AI model is disposed on the user equipment side and the first AI model is to be selected, the message comprises a model parameter or model index of the selected first AI model;
in a case that the first AI model is disposed on the user equipment side and the second AI model is to be selected, the message comprises information of a one-bit notification;
in a case that the second AI model is disposed on the user equipment side and the first AI model is to be selected, the message comprises information of a one-bit notification; and
in a case that the second AI model is disposed on the user equipment side and the second AI model is to be selected, the message comprises a model parameter or model index of the selected second AI model.

40. The electronic apparatus according to claim 33, wherein the processing circuitry is configured to perform the matching by:
determining an AI model to be used on the base station side in the matching;
including the model parameter or model index of the determined AI model in a matching request and sending the matching request to the user equipment, so that the user equipment determines the AI model to be used on the user equipment side based on the model parameter or model index; and
receiving, from the user equipment, a message indicating whether the matching is successful or unsuccessful.

41. The electronic apparatus according to claim 40, wherein
in a case that the first AI model is disposed on the user equipment side, the sent model parameter comprises one or more of the following model parameters of the second AI model: an input time window length and an output time window length, an input parameter size, input and output parameter properties, and a minimum number of measurements of historical data to be used;
in a case that the second AI model is disposed on the user equipment side, the sent model parameter comprises at least an input parameter size and input and output parameter properties of the first AI model.

42. The electronic apparatus according to claim 40, wherein in a case that the matching is successful,
in a case that the first AI model is disposed on the user equipment side, the processing circuitry is further configured to receive an input parameter size of the first AI model from the user equipment; and
in a case that the second AI model is disposed on the user equipment side, the processing circuitry is further configured to receive an input time window length and an output time window length of the second AI model from the user equipment.

43. The electronic apparatus according to claim 40, wherein in a case that the matching is unsuccessful, the processing circuitry is further configured to send, to the user equipment, a message indicating whether the first AI model or the second AI model is to be selected.

44. The electronic apparatus according to claim 43, wherein
in a case that the first AI model is disposed on the user equipment side and the first AI model is to be selected, the message comprises information of a one-bit notification;
in a case that the first AI model is disposed on the user equipment side and the second AI model is to be selected, the message comprises a model parameter or model index of the selected second AI model;
in a case that the second AI model is disposed on the user equipment side and the first AI model is to be selected, the message comprises a model parameter or model index of the selected first AI model; and
in a case that the second AI model is disposed on the user equipment side and the second AI model is to be selected, the message comprises information of a one-bit notification.

45. The electronic apparatus according to claim 33, wherein in a case that the first AI model is disposed on the user equipment side and the second AI model is disposed on the base station side, after the matching is successful, the processing circuitry is further configured to receive, from the user equipment, a beam measurement result within an input time window length of the second AI model in a single-time or multiple-time manner, so that the second AI model performs beam prediction using the beam measurement result.

46. The electronic apparatus according to claim 45, wherein the processing circuitry is configured to receive the beam measurement result and a prediction result of the first AI model through a data channel.

47. The electronic apparatus according to claim 33, wherein after the matching is successful,
in a case that the first AI model and/or the second AI model triggers a supervision mechanism, if the supervision mechanism is executed by the user equipment, the processing circuitry is configured to obtain an execution period of the supervision mechanism from the user equipment, and if the supervision mechanism is executed by the base station, the processing circuitry is configured to provide the user equipment with the execution period of the supervision mechanism, and
wherein in a case that an AI model on the user equipment side triggers a supervision mechanism, the processing circuitry is further configured to keep an AI model on the base station side silent during the execution period.

48. A method for user equipment side of wireless communications, comprising:
performing matching on a first artificial intelligence (AI) model for performing spatial domain beam prediction and a second AI model for performing time domain beam prediction; and
in a case of matching succeeding, reusing beam measurement results between the first AI model and the second AI model.

49. A method for a base station side of wireless communications, comprising:
performing matching on a first artificial intelligence (AI) model for performing spatial domain beam prediction and a second AI model for performing time domain beam prediction; and
in a case of matching succeeding, reusing beam measurement results between the first AI model and the second AI model.

50. A computer-readable storage medium having computer-executable instructions stored thereon, which when executed by a processor, cause the processor to perform the method according to claim 48 or 49.
